(19) Europäisches Patentamt
European Patent Office
Office européen des brevets

(11) **EP 4 711 909 A1**

(12) **EUROPEAN PATENT APPLICATION**
published in accordance with Art. 153(4) EPC

(43) Date of publication:
**18.03.2026 Bulletin 2026/12**

(21) Application number: **24802688.2**

(22) Date of filing: **11.04.2024**

(51) International Patent Classification (IPC):
***G06F 3/0485*** (2022.01)

(52) Cooperative Patent Classification (CPC):
**G06F 3/0485**

(86) International application number:
**PCT/CN2024/087347**

(87) International publication number:
**WO 2024/230402 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.05.2023 CN 202310500047
31.05.2023 CN 202310636948**

(71) Applicant: **Ecovacs Home Service Robotics Co.,
Ltd.
Suzhou, Jiangsu 215104 (CN)**

(72) Inventors:
• **LIU, Zhe**
  **Suzhou, Jiangsu 215104 (CN)**
• **LI, Mengmeng**
  **Suzhou, Jiangsu 215104 (CN)**
• **AI, Ling**
  **Suzhou, Jiangsu 215104 (CN)**
• **HE, Min**
  **Suzhou, Jiangsu 215104 (CN)**
• **ZHANG, Yu**
  **Suzhou, Jiangsu 215104 (CN)**
• **DING, Minquan**
  **Suzhou, Jiangsu 215104 (CN)**

(74) Representative: **Bittner, Bernhard
Hannke Bittner & Partner
Patent- und Rechtsanwälte mbB
Prüfeninger Strasse 1
93049 Regensburg (DE)**

(54) **ROBOT CONTROL METHOD AND SYSTEM, AND CLIENT DEVICE**

(57) Embodiments of the present application provide a robot control method and system, and a client device. The method comprises: in response to a sliding operation in any direction in 360 degrees on an interface, determining a target direction; determining a moving speed according to an area to which the operation termination position of the sliding operation belongs in the interface; and according to the target direction, controlling a robot to adjust the posture and to move at the moving speed according to the adjusted posture. According to the technical solution provided by the present application, by means of the design that a user can perform a sliding operation in any direction on an interface, the user can control the robot to move in any direction, thereby providing an omnidirectional movement control function for the robot. In addition, according to the present solution, the moving speed is determined according to the area to which the operation termination position belongs on the interface, so that a variety of moving speed determination modes can be achieved, thereby meeting users' diverse control needs for moving speeds of robots, and improving users' control experience.

**FIG. 2**

Description

## CROSS REFERENCES

The present application claims priority to Chinese patent applications listed in the Table below, which are incorporated herein by reference in their entireties.

| Filing Date | Application No. | Application Title |
|---|---|---|
| 2023-05-06 | 202310500047.3 | REMOTE CONTROL METHOD, APPARATUS AND DEVICE FOR SURFACE CLEANING ROBOT, AND READABLE STORAGE MEDIUM |
| 2023-05-31 | 202310636948.5 | ROBOT CONTROL METHOD AND SYSTEM, AND CLIENT DEVICE |

## TECHNICAL FIELD

The present application relates to the technical field of robotics, and in particular to a robot control method and system, and a client device.

## BACKGROUND

Surface cleaning robots, such as window cleaning robots, can help users living on higher floors meet the need for cleaning various smoother surfaces such as external facade glass windows and glass doors, reduce labor cost inputs, and lower the risk of cleaning windows and doors.

When using the surface cleaning robots, the users can manually remotely control the surface cleaning robots to complete work by means of a remote control tool. However, currently, when a user remotely controls a surface cleaning robot by a remote control tool such as a corresponding application installed on a terminal, there exists a case where the user cannot remotely control the robot to move in a direction in which the user actually wants the surface cleaning robot to move, so as to perform cleaning work; and when the surface cleaning robot is remotely controlled to clean a surface such as large-area glass, the user is often required to perform manipulation all the time on a corresponding application interface, and once the manipulation is stopped, the surface cleaning robot will immediately stop working, which brings great inconvenience to the user.

## SUMMARY

In view of the above problems, the present application provides a robot control method and system, and a client device that solve the above problems or at least partially solve the above problems.

In an embodiment of the present application, there is provided a robot control method. The method, applicable to a client, includes:

determining a target direction in response to a sliding operation in any direction in 360 degrees on an interface;

determining a moving speed according to an area to which an operation termination position of the sliding operation belongs in the interface; and

controlling, according to the target direction, a robot to adjust a posture and to move at the moving speed according to the adjusted posture.

In another embodiment of the present application, there is further provided a robot control method. The method, applicable to a client, includes:

determining a sliding distance in response to a sliding operation on an interface;

determining, according to the moving distance, an area to which an operation termination position of the sliding operation belongs in the interface;

determining a moving speed according to the area to which the operation termination position belongs in the interface; and

controlling the robot to move at the moving speed.

In yet another embodiment of the present application, there is further provided a robot control method. The method, applicable to a client, includes:

determining a target direction in response to a sliding operation in any direction in 360 degrees on an interface;

determining a moving speed in response to a release operation after the sliding operation reaches a target area;

controlling, according to the target direction, the robot to adjust a posture and to continuously move at the moving speed according to the adjusted posture.

In yet another embodiment of the present application, there is further provided a robot control method. The method, applicable to a client, includes:

displaying, on an interface, a manipulation control including a limit zone and a draggable widget on the limit zone that can be dragged in any direction;

controlling, in a case where it is detected that the draggable widget is triggered to move in any direction in 360 degrees on the limit zone, a robot to follow a corresponding target direction when the draggable widget stops moving, to adjust a moving direction and to move in the adjusted moving direction;

releasing the draggable widget in a case where it is detected that movement of the draggable widget is stopped within a first area of the limit zone, and returning the draggable widget to a set position to control the robot to stop moving; and

releasing the draggable widget in a case where it is detected that movement of the draggable widget is stopped within a second area of the limit zone, and locking the draggable widget to control the robot to maintain moving in the adjusted moving direction; wherein the second area is outside the first area.

A further embodiment of the present application provides a robot control system. The robot control system includes:

a robot for performing a job task on a surface of a job object; and

a client in communication connection with the robot for implementing the steps of the robot control methods provided above in the present application.

A further embodiment of the present application provides a client device. The client device includes a memory and a processor; wherein,

the memory stores one or more computer instructions; and

the processor is coupled with the memory for executing the one or more computer instructions to implement the steps of the robot control methods provided above in the present application.

According to a technical solution provided in an embodiment of the present application, after a target direction is determined in response to a sliding operation in any direction in 360 degrees on an interface, a moving speed can be determined according to an area to which an operation termination position of the sliding operation belongs in the interface, and thereafter, a robot can be controlled according to the target direction to adjust a posture and to move at the moving speed according to the adjusted posture. By means of the design that a user can perform a sliding operation in any direction on the interface, this solution allows the user to control the robot to move in any direction, thereby providing an omnidirectional movement control function for the robot. In addition, according to this solution, the moving speed is determined according to the area to which the operation termination position belongs on the interface, so that a variety of moving speed determination modes can be achieved, thereby meeting the user's diverse control needs for the moving speed of the robot, and improving the user's control experience.

According to a technical solution provided in another embodiment of the present application, an area to which an operation termination position of a sliding operation belongs in the an interface can be first determined based on a sliding distance determined in response to the sliding operation for the interface, and then a moving speed is determined according to the area to which the operation termination position belongs in the interface, thereby controlling a robot to move at the moving speed. By determining the moving speed based on the area to which the operation termination position belongs in the interface, this solution can implement multiple controls over the speed at which the robot moves, providing a user with diverse speed control capabilities.

According to a technical solution provided in yet another embodiment of the present application, after a target direction is determined in response to a sliding operation in any direction in 360 degrees on an interface, and a moving speed is determined in response to a release operation after the sliding operation reaches a target area, a robot can be controlled according to the target direction to adjust a posture and to continuously move at the determined moving speed in the adjusted posture. After a user performs the sliding operation to reach the target area, this solution can implement control over the continuous movement of the robot even if the user is not performing any operations, which is beneficial to reducing the user's operating burdens, improving the remote control (human-computer interaction) efficiency, lowering remote control costs, and providing the user with very friendly human-computer interaction especially when the robot is controlled to conduct a job on a job object with a large surface area.

Also, window cleaning robots are a type of intelligent appliance for window cleaning, which are increasingly popular among users due to their flexible movement and easy operation. In a window cleaning process, a window cleaning robot adheres to glass relying on negative pressure generated by a fan or the like, and is driven by tracks installed at the bottom to move autonomously on the glass surface, thereby completing the cleaning. However, when a travelling direction of the window cleaning robot needs to be adjusted, there will be a complex process and difficulties in controlling the window cleaning robot to travel in a direction desired by a user. To this end, the present application further provides a remote control method, apparatus and device for a surface cleaning robot, and a readable storage medium. By operating a remote control widget on an APP interface, the surface cleaning robot is controlled within a 360-degree range to face any direction, so that the surface cleaning robot quickly faces a direction desired by a user, and the operation is simple and efficient.

In a first aspect, an embodiment of the present application provides a remote control method for a surface cleaning robot, which is applied to an electronic device, the method including:

displaying a remote control page on a user interface in response to a remote control page access instruction, wherein the remote control page is provided with an operable remote control widget; and

remotely controlling a travelling direction of the surface cleaning robot in response to a user's operation on the remote control widget.

In a second aspect, an embodiment of the present application provides a remote control method for a surface cleaning robot, which is applied to the surface cleaning robot, the method including:

receiving a remote control instruction from an electronic device, wherein the remote control instruction is triggered by the electronic device in response to a user's operation on a remote control widget that is an operable control displayed on a remote control page of a user interface of the electronic device; and
controlling a travelling direction according to the remote control instruction.

In a third aspect, an embodiment of the present application provides a remote control apparatus, including:

a display module for displaying a remote control page on a user interface in response to a remote control page access instruction, wherein the remote control page is provided with an operable remote control widget; and

a processing module for remotely controlling a travelling direction of the surface cleaning robot in response to a user's operation on the remote control widget.

In a fourth aspect, an embodiment of the present application provides a remote control apparatus, including:

a receiving module for triggering control operations, wherein the remote control widget is an operable control displayed on a remote control page of a user interface of the electronic device; and

a processing module for controlling a travelling direction according to the remote control instruction.

In a fifth aspect, an embodiment of the present application provides an electronic device, including: a processor, a memory, and a computer program stored on the memory and runnable on the processor, wherein when the processor executes the computer program, the electronic device implements the method described in the first aspect or in various possible implementations of the first aspect.

In a sixth aspect, an embodiment of the present application provides an electronic device, including: a processor, a memory, and a computer program stored on the memory and runnable on the processor, wherein when the processor executes the computer program, the electronic device implements the method described in the second aspect or in various possible implementations of the second aspect.

In a seventh aspect, an embodiment of the present application provides a computer-readable storage medium, in which computer instructions are stored, wherein the computer instructions, when executed by a processor, are used for implementing the method described in the first aspect or in various possible implementations of the first aspect.

In a seventh aspect, an embodiment of the present application provides a computer-readable storage medium, in which computer instructions are stored, wherein the computer instructions, when executed by a processor, are used for implementing the method described in the second aspect or in various possible implementations of the second aspect.

In a ninth aspect, an embodiment of the present application provides a computer program product containing a computing program which, when executed by a processor, implements the method described in the first aspect or in various possible implementations of the first aspect.

In a tenth aspect, an embodiment of the present application provides a computer program product containing a computing program which, when executed by a processor, implements the method described in the second aspect or in various possible implementations of the second aspect.

The embodiments of the present application provide the remote control method, apparatus and device for the surface cleaning robot, and the readable storage medium. The APP of the surface cleaning robot is installed on the electronic device, and the user calls up the remote control page on the APP and performs the sliding operation on the remote control widget on the remote control page, thereby remotely controlling the travelling direction of the surface cleaning robot. By adopting such a solution, the APP of the surface cleaning robot is installed on the electronic device, and by operating the remote control widget on the APP interface, the surface cleaning robot is controlled within a 360-degree range to face any direction, so that the surface cleaning robot quickly faces a direction desired by the user, and the operation is simple and efficient.

## BRIEF DESCRIPTION OF THE DRAWINGS

In order to more clearly illustrate the technical solutions in the embodiments of the present application or in the existing technology, a brief introduction will be given below to the drawings required for use in the description of the embodiments or the existing technology. Obviously, the drawings described below are some embodiments of the present application. For those skilled in the art, other drawings can be obtained according to these drawings on the premise of inputting no creative labor.

FIG. 1a is a schematic diagram of an inner/outer surface of a job object provided in an embodiment of the present application;

FIG. 1b is a schematic diagram showing different directions of the inner/outer surface of the job object provided in the embodiment of the present application;

FIG. 2 is a schematic flow chart of a robot control method provided in an embodiment of the present application;

FIG. 3 is a schematic principle diagram of accessing a manual remote control interaction interface according to an embodiment of the present application;

FIGS. 4a and 4b are schematic diagrams of dragging, interaction and control on a first area of a limit zone contained in the manual remote control interaction interface according to the embodiment of the present application;

FIGS. 5a and 5b are schematic diagrams of a draggable widget provided in an embodiment of the present application, which is dragged to a second area of the limit zone;

FIGS. 6a and 6b are schematic diagrams of the draggable widget provided in the embodiment of the present application, which is in a locked state;

FIG. 7 is a schematic diagram of a graphic element on the draggable widget provided in an embodiment of the present application, which is synchronized with the robot's orientation posture;

FIGS. 8 and 9 are schematic flow charts of robot control methods provided in embodiments of the present application;

FIG. 10 is a schematic structural diagram of a robot control system provided in an embodiment of the present application;

FIG. 11 is a schematic structural diagram of a robot control apparatus provided in an embodiment of the present application;

FIG. 12 is a schematic scenario diagram of a remote control method for a surface cleaning robot provided in an embodiment of the present application;

FIG. 13 is a bottom view of a surface cleaning robot provided in an embodiment of the present application, which is remotely controlled by an electronic device;

FIG. 14 is a schematic diagram of a rotation process of a three-axis acceleration sensor of the surface cleaning robot;

FIG. 15 is a flow chart of a remote control method for a surface cleaning robot provided in an embodiment of the present application;

FIG. 16 is a schematic diagram of interface variations of the electronic device in the control method for the surface cleaning robot provided in the embodiment of the present application;

FIG. 17 is a schematic diagram of a relationship between angle and direction in the control method for the surface cleaning robot provided in the embodiment of the present application;

FIG. 18A is a schematic diagram of sliding the remote control widget toward 90° by the user in the control method for the surface cleaning robot provided in the embodiment of the present application;

FIG. 18B is a schematic diagram of an action of the surface cleaning robot;

FIG. 18C is a schematic diagram of another action of the surface cleaning robot;

FIG. 18D is a schematic diagram of yet another action of the surface cleaning robot;

FIG. 19 is a schematic diagram of a first preset duration and a second preset duration in the control method for the surface cleaning robot provided in the embodiment of the present application;

FIG. 20A is a schematic diagram of interfaces in the control method for the surface cleaning robot provided in the embodiment of the present application, where the user successively slides the remote control widget to different directions;

FIG. 20B is a schematic diagram of an action of the surface cleaning robot corresponding to FIG. 20A;

FIG. 21A is a schematic diagram of an action of the surface cleaning robot provided in the embodiment of the present application when located on the outer window;

FIG. 21B is a schematic diagram of another action of the surface cleaning robot provided in the embodiment of the present application when located on the outer window;

FIG. 22 is a flow chart of a control method for a surface cleaning robot provided in an embodiment of the present application;

FIG. 23 is a schematic diagram of a remote control apparatus provided in an embodiment of the present application; and

FIG. 24 is a schematic diagram of a remote control apparatus provided in an embodiment of the present application.

## DETAILED DESCRIPTION

Before introducing the technical solutions provided in the embodiments of the present application, some nouns or professional terms involved in the present application will be briefly introduced and explained.

An "inner surface" and an "outer surface" of an object such as a glass window and a glass door (also referred to as a job object below) involved in the present application are relative to a user. Specifically:

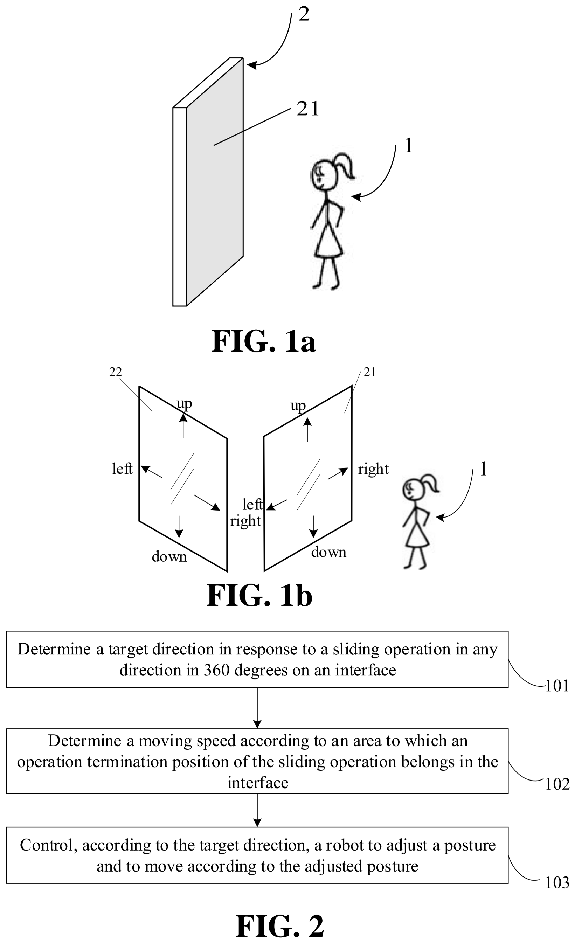

The inner surface refers to a window face or door face facing the user when the user faces a surface of the object such as the glass window or glass door. As shown in FIG. 1a, a window face 21 of a glass window 2 facing a user 1 is an inner window (inner surface) relative to the user 1.

The outer surface refers to a window face or door face on the other side opposite to the inner surface, and the outer surface and the inner surface are two opposite faces that are never adjacent. FIG. 1b is an exploded schematic diagram of surfaces of the glass window 2 in FIG. 1a. With reference to FIG. 1b, a window face 22 on the other side opposite to the window face 21 (which is the inner window) is an outer window (outer surface) relative to the user 1.

In order to enable those skilled in the art to better understand the solutions of the present application, the technical solutions in the embodiments of the present application will be clearly and completely described below in conjunction with the drawings in the embodiments of the present application.

Some processes described in the specification, claims and the above drawings of the present application include multiple operations that appear in a specific order, which may be performed out of the order in which they appear herein or may be performed in parallel. Operation serial numbers, such as 101 and 102, are only used to distinguish different operations, and the serial numbers themselves do not represent any order of performance. Additionally, these processes may include more or fewer operations, and the operations may be performed in sequence or in parallel. It should be noted that the description of "first" and "second" herein is used to distinguish different modes, devices, modules, etc., which does not represent a sequential order, and does not make a limitation that the "first" and "second" are of different types either. In addition, the embodiments described below are only some of the embodiments of the present application, rather than all the embodiments. Based on the embodiments in the present application, all other embodiments obtained by those skilled in the art without making any creative labor shall fall within the scope of protection of the present application.

The various embodiments provided in the present application will be introduced and explained in detail below.

FIG. 2 shows a schematic flow chart of a robot control method provided in an embodiment of the present application. An execution subject of the method is a client, which may be a terminal used by a user. More specifically, the execution subject may be an application software installed on the terminal, or a hardware with an embedded program integrated on the terminal, or a tool software embedded in the terminal operating system, etc., which is not limited by this embodiment. Preferably, the execution subject is specifically application software installed on the terminal that can be used for remotely controlling a robot. The terminal may be a smart phone, a tablet computer, a personal computer, a smart wearable device (e.g., as a smart bracelet), a remote controller, and the like that can communicate with the robot, which is not limited by this embodiment. The robot may be a surface cleaning robot for cleaning surfaces, such as a window cleaning robot, a floor sweeping robot, and the like. As shown in FIG. 2, the robot control method provided in this embodiment includes the following steps:

101. determining a target direction in response to a sliding operation in any direction in 360 degrees on an interface;

102. determining a moving speed according to an area to which an operation termination position of the sliding operation belongs in the interface; and

103. controlling, according to the target direction, a robot to adjust a posture and to move according to the adjusted posture.

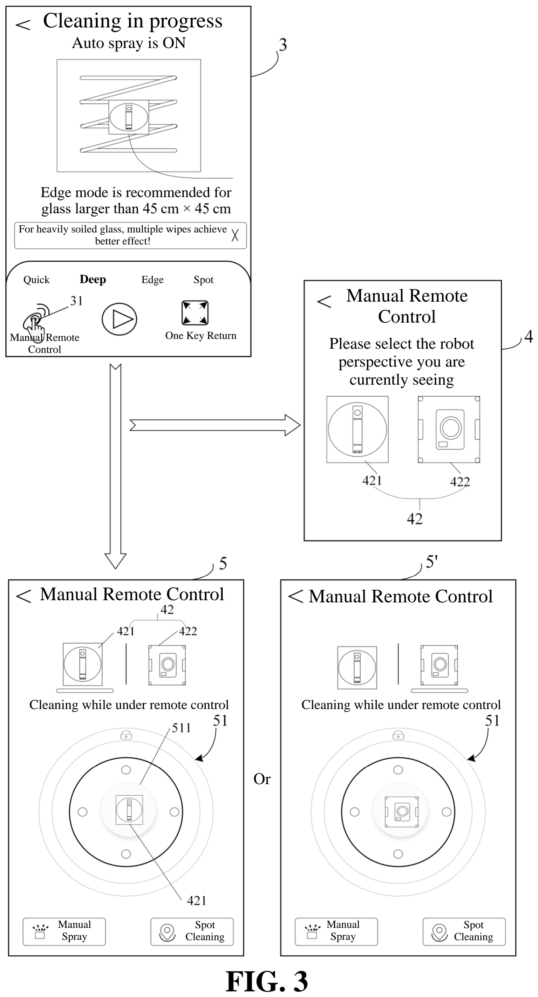

In the above 101, the interface is provided by the client. The client (e.g., application software) often has multiple interfaces, each corresponding to different functions. The interface described above is a manual remote control interaction interface provided by the client for remotely controlling the robot, for example, a manual remote control interaction interface 5 or a manual remote control interaction interface 5' shown in FIG. 3, which can be accessed by a user by clicking a "manual remote control" widget 31 on a main interface 3 provided by the client.

With reference to the manual remote control interaction interface 5 shown in FIG. 3, there is displayed a manipulation control on this interface, which includes a limit zone 51 and a draggable widget 511 on the limit zone 51 that is draggable in any direction in 360 degrees. The limit zone 51 may be used for limiting a range within which the draggable widget can be dragged, locking the draggable widget, and the like. The draggable widget 511 is at least used for controlling a direction in which the robot moves on a surface of the job object. For example, the moving speed of the robot may be set to a fixed value, that is, the robot moves at a constant speed on the surface of the job object. In this case, the draggable widget 511 may only be used for controlling the moving speed of the robot. The above draggable widget 511 can be moved in any direction within a range defined by the limit zone 51, so that the user can implement an omnidirectional movement control over the robot by dragging the draggable widget 511 in any direction within the limit zone 51. That is, the sliding operation performed in any direction in 360 degrees on the interface as described above in 101 is, in other words, a touch-and-drag operation performed by the user on the draggable widget 511 in any direction in 360 degrees in the limit zone 51. Touching of the draggable widget 511 may be detected by a corresponding sensor on the execution subject, thereby judging whether the user has triggered a touch-and-drag operation for the draggable widget in the limit zone. Specifically, in a case of detecting that the draggable widget is touched and a position of the draggable widget changes, it is determined that the user has triggered a drag operation for the draggable widget in the limit zone.

In addition to being used for controlling the direction of movement of the robot, the above draggable widget 511 may also be used, of course in some other embodiments, for controlling other variables of the robot. For example, it may also be used for controlling the speed of movement of the robot. Specifically, the speed of movement of the robot may be controlled in conjunction with at least one of an area where the draggable widget 511 is located in the limit zone 51 and a distance relative to a center of the limit zone 51.

Specific implementations of controlling the direction and speed of movement of the robot by the draggable widget 511 will be expounded below and will not be repeated here.

The limit zone 51 and the draggable widget 511 shown in FIG. 3 are both circular in shape. This circle is only for schematic purposes. In practice, the limit zone 51 and the draggable widget 511 may also be other shapes, such as a rectangle (e.g., a rounded rectangle or a right-angled rectangle), an ellipse, and the like. In addition, a default initial display position of the above draggable widget 511 is a center (the very center) of the limit zone. That is, in a case where the user does not perform any drag operation for the draggable widget, the draggable widget is displayed by default at a central position of the limit zone. Specifically, by default, the draggable widget and the limit zone are displayed concentrically.

From the above, the method provided in this embodiment may further include the following steps:

100a. displaying, on the interface, a manipulation control including a limit zone and a draggable widget on the limit zone that can be dragged in any direction;

100b. moving, in response to the sliding operation, the draggable widget within the limit zone according to the sliding operation;

in the above 101, determining a target direction according to an operation termination position of the sliding operation. That is, an implementable solution of the above 101 of "determining a target solution in response to the sliding operation" may specifically include:

1011. determining an operation termination position of the sliding operation; and

1012. determining the target direction based on the operation termination position.

In a specific implementation, the operation termination position of the above sliding operation is a position of the draggable widget in the limit zone when the movement is stopped, or a position of the draggable widget in the limit zone when the user stops dragging this draggable widget, which, specifically, may be determined according to position information of a center point of the draggable widget in the limit zone when dragging stops.

Stopping dragging the draggable widget refers mainly to a state in which the user pauses dragging the draggable widget but still keeps touching the draggable widget; of course, in other instances, stopping dragging the draggable widget may also refer to that the user ends the drag operation for the draggable widget, that is, the user is no longer touching the draggable widget (or has performed a release operation for the above sliding operation). In short, the user has released the draggable widget, for example in a case as described below where the user drags the draggable widget to a second area of the limit zone and releases it.

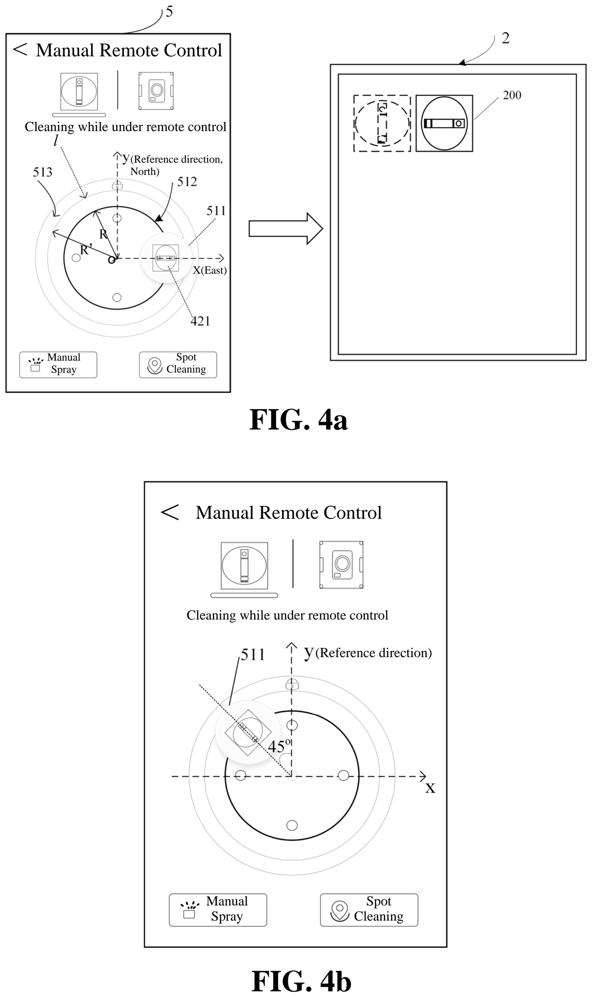

For example, as shown in FIG. 4a, when the movement is stopped, the draggable widget 511 is at a position on a positive half axis of the x-axis and away from the central position of the limit zone by a distance R, and this position is the operation termination position of the sliding operation.

Based on the operation termination position of the above sliding operation, a current distance of the draggable widget relative to the center of the limit zone, a current area where the draggable widget is located in the limit zone, a current deflection angle of the draggable widget relative to a reference direction, and the like can be analyzed, so as to provide data support for the robot to determine the speed and direction of movement.

Based on the above, in an implementable technical solution, the above 1012 "determining the target direction based on the operation termination position" may specifically include:

10121. determining, based on the operation termination position, a deflection angle of the draggable widget relative to a reference direction; and

10122. determining the target direction according to the deflection angle.

During specific implementation, a positive direction of a coordinate axis in the image coordinate system corresponding to the limit zone can be used as, but not limited to, the reference direction mentioned above. When the deflection angle of the draggable widget relative to the reference direction is determined, an included angle between a vector formed by a connecting line between the central position of the limit zone and the operation termination position (that is, the position where the movement of the draggable widget is stopped) and the reference direction serves as the deflection angle according to a preset direction, such as a clockwise direction.

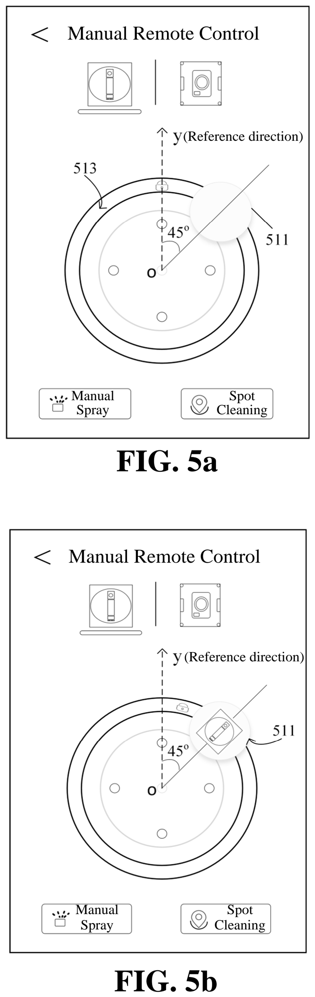

For example, with reference to FIG. 4a, the positive direction of the y-axis in the image coordinate system corresponding to the limit zone (which is the true north direction) may serve as the reference direction. When the dragging is stopped, if the deflection angle of the draggable widget relative to the positive direction of the y-axis is 90°, then the determined target direction is the positive direction of the x-axis (which is the positive right direction, namely the true east direction); or with reference to FIG. 5a, if the deflection angle of the draggable widget 511 relative to the reference direction is 45°, then the determined target direction is a direction of 45° north by east.

The above determined target direction can decide a direction in which the robot moves on the surface of the job object. In other words, the target direction indicated by the deflection angle of the draggable widget relative to the reference direction is a direction of movement determined for the robot.

The specific implementation of the above 102 will be described in detail below and will not be repeated here.

In the above 103, the determined target direction can be sent to the robot so that the robot makes adjustment to its own orientation posture according to the received target direction, and after the adjustment is completed, it moves according to the adjusted orientation posture on the surface of the job object at the moving speed determined in the above step 102, thereby performing the corresponding job task.

For example, by continuing to refer to FIG. 4a and continuing with the example listed in the detailed description of steps 10121~10122, when it is assumed that the robot moves to a position on the surface of the job object 2, such as the position of the robot 200 shown by dotted lines, the target direction received from the client is the positive direction of the x-axis (the positive right direction), at which time the robot will adjust its own orientation posture to the positive right direction, the adjusted orientation posture is such as a posture of the robot 200 shown by solid lines, and it moves on the surface of the job object 2 according to the adjusted orientation posture.

The job object may be a vertical facade-type glass window, a tile wall face, and the like, or may be the ground. For example, if the robot is an adhesion-type surface cleaning robot, the job object may be a vertical facade-type glass window, a tiled wall face, and the like; and if the robot is a floor sweeping robot, the job object may be the ground.

It should be additionally noted here that in addition to sending the above determined target direction to the robot, the determined moving speed and an actual surface of the job object where the robot is located may also be sent to the robot, so as to guarantee that the robot can move in a correct direction at the corresponding moving speed. The specific implementation regarding determination of the moving speed and the reasons and specific implementation for determination of an actual surface corresponding to the job of the robot will be described in detail below and will not be repeated here.

According to the technical solution provided in this embodiment, after a target direction is determined in response to a sliding operation in any direction in 360 degrees on an interface, a moving speed can be determined according to an area to which an operation termination position of the sliding operation belongs in the interface, and thereafter, a robot can be controlled according to the target direction to adjust a posture and to move at the moving speed according to the adjusted posture. By means of the design that a user can perform a sliding operation in any direction on the interface, specifically by the design enabling the draggable widget to be dragged in any direction, this solution allows the user to control the robot to move in any direction, thereby providing an omnidirectional movement control function for the robot. In addition, according to this solution, the moving speed is determined according to the area to which the operation termination position belongs on the interface, so that a variety of moving speed determination modes can be achieved, thereby meeting the user's diverse control needs for the moving speed of the robot, and improving the user's control experience.

Further, in addition to determining the target direction according to the operation termination position of the sliding operation to control the direction of movement of the robot, this embodiment can also determine the moving speed according to the operation termination position of the sliding operation to control the moving speed of the robot. The moving speed may be determined in conjunction with a sliding distance. Based on this, in an implementable technical solution, the above 102 "determining a moving speed according to an area to which the operation termination position belongs on the interface" may specifically include the following steps:

S01. determining a sliding distance based on the operation termination position;

S02. determining, according to the sliding distance, an area to which the operation termination position belongs in the interface; and

S03. determining the moving speed based on the area to which the operation termination position belongs in the interface.

In the above S01, the sliding distance refers to a distance between the operation termination position of the sliding operation and the center of the limit zone. That is, the above S01 "determining a sliding direction based on the operation termination position" may specifically include:

S011. calculating a distance between the operation termination position and a central position of the limit zone to determine the same as the sliding distance.

During specific implementation, a corresponding distance calculation algorithm, such as Euclidean distance, may be utilized to calculate the distance between the operation termination position and the central position of the limit zone.

In the above S02, since the operation termination position is a position on the limit zone where the draggable widget stops moving, an area where the draggable widget is located in the limit zone can be determined first according to the sliding distance; the area where the draggable widget is located in the limit zone is an area to which the operation termination position belongs on the interface. That is, the above S02 "determining, according to the sliding distance, an area to which the operation termination position belongs in the interface" may specifically include:

S021. determining, according to the sliding distance, an area where the draggable widget is located in the limit zone; and

S022. determining the area where the draggable widget is located in the limit zone as an area to which the operation termination position belongs in the interface.

Accordingly, an implementation of the above S03 "determining the moving speed based on the area to which the operation termination position belongs in the interface" is:

S031. determining the moving speed based on the area where the draggable widget is located in the limit zone.

During specific implementation, in this embodiment, the limit zone is mainly divided into two areas. When the draggable widget is in different areas, different modes will be accordingly adopted for determining the moving speed of the robot to be controlled. For example, it is assumed that the limit zone is divided mainly into a first area and a second area outside the first area. Specifically, as shown in FIG. 4a, if the first area 512 is an area of the limit zone encircled by a circle centered at the center of the limit zone with a radius R, and the second area 513 is an area encircled by a circular ring at the outermost portion of the limit zone, then in a case where the sliding distance is less than or equal to R, the first area of the draggable widget in the limit zone can be determined; and in a case where the sliding distance is greater than or equal to R', the second area of the draggable widget in the limit zone can be determined; where ; where R' represents a distance from the center of the limit zone to an inner edge line of the second area 513.

If the draggable widget is in the first area when dragging is stopped, the speed of movement of the robot can be determined by a distance value between the draggable widget and the center of the limit zone (i.e., the sliding distance mentioned above), or a preset speed value may be directly determined as the speed of movement of the robot; and if the draggable widget is in the second area when dragging is stopped, the speed of movement of the robot can be determined by a deflection angle of the draggable widget relative to the reference direction, or the speed of movement of the robot may be decided according to the user's rotation angle, rotation direction, and the like of the second area, and of course, another preset speed value may be directly determined as the speed of movement of the robot, which will not be limited here.

Based on the above, in this embodiment, the limit zone mentioned above includes the first area and the second area outside the first area. In a specific implementable solution, the above S031 "determining the moving speed based on the area where the draggable widget is located in the limit zone" may be implemented by adopting steps in any case as below:

Case I: if the draggable widget is in the first area of the limit zone, determining the moving speed according to the sliding distance; or determining a first preset speed as the moving speed.

Case II: if the draggable widget is in the second area of the limit zone, determining the moving speed according to the deflection angle; or determining the moving speed in response to a rotation operation on the second area and according to a rotation angle and a rotation direction corresponding to the rotation operation; or determining a second preset speed as the moving speed.

In the above Case I, if the implementation 11 is adopted, i.e., determining the moving speed according to the sliding distance, then the smaller the sliding distance, the smaller the moving speed; and the greater the sliding distance, the greater the moving speed. That is, the sliding distance is proportional to the moving speed. During specific implementation, the moving speed may be determined based on a preset correspondence between distance and speed, and the preset correspondence between distance and speed may be characterized by a mathematical expression that may be a continuous function or a piecewise function.

In a case where the data expression for the preset correspondence between distance and speed is a continuous function, the moving speed of movement of the robot may be decided according to a ratio of a distance d (i.e., the sliding distance) of the draggable widget relative to the center of the limit zone to a maximum distance D over which the user can drag the draggable widget in the first area; the maximum distance D over which the draggable widget can be dragged in the first area may be determined according to, but not limited to, a distance of a target pixel point in the first area relative to the center of the limit zone, the target pixel point being a pixel point in the first area that is farthest from the center of the limit zone. In this case, the data expression for the preset correspondence between distance and speed may be Formula 1 as below:

$$\text{Formula 1: Speed } v = \frac{d}{D} \times V \ ;$$

where v represents a maximum moving speed supported by the robot.

For example, with reference to FIG. 4a, it is assumed that the first area 512 is an area of the limit zone encircled by a circle centered at the center of the limit zone with a radius R, when dragging is stopped, the draggable widget 511 is on a boundary of the first area, that is, a distance of the draggable widget 511 from the center of the limit zone is R. Based on the preset correspondence between distance and speed characterized by the above Formula 1, the moving speed determined for the movement of the robot is V.

In a case where the data expression for the preset correspondence between distance and speed is a piecewise function, the above maximum distance D over which the draggable widget can be dragged in the first area can be constructed in segments according to several speed levels supported by the robot, where each segment corresponds to a speed gear supported by the robot. For example, it is assumed that the moving speed supported by the robot is divided into the following three levels: high speed (corresponding to a moving speed of $V_1$), medium speed (corresponding to a moving speed of $V_2$), and low speed (corresponding to a moving speed of $V_3$), and accordingly, the maximum distance D may be divided into three segments, and the three distance segment ranges obtained by division are as follows: $0 \sim D_1$, $D_1 \sim D_2$, $D_2 \sim D$, in which case the data expression for the preset correspondence between distance and speed may be Formula 2 as below:

$$\text{Formula 2: Speed } v = \begin{cases} V_3 & 0 \le d < D_1 \\ V_2 & D_1 \le d < D_2 \\ V_1 & D_2 \le d < D \end{cases} ,$$

where $V_1 > V_2 > V_3$

where the above $V_1$, $V_2$ and $V_3$ represent the moving speeds supported by the robot.

If the implementation 12 is adopted, i.e., determining the first preset speed as the moving speed, this first preset speed may be flexibly set according to actual conditions, as long as the first preset speed is guaranteed not to exceed the maximum moving speed supported by the robot.

In the above Case II, if the implementation 21 is adopted, i.e., determining the moving speed for the robot according to the deflection angle of the draggable widget relative to the reference direction, the prerequisite is that the second area as designed is fixed and non-rotatable, in which case the deflection angle (or the target direction) and the moving speed are in a one-to-one correspondence. During specific implementation, the moving speed may be determined based on a preset correspondence between angle and speed. The preset correspondence between angle and speed may be established based on the number of directions into which the direction of the second area is divided and the maximum moving speed supported by the robot; and if the number of directions into which the direction of the second area is divided is N, then the circumferential angle corresponding to the second area (which is 360°, viewed around the center of the limit zone) is divided into N parts at equal intervals, thereby dividing the direction of the second area into N directions, and each change in angle by 360°/N in the second area means a change in direction. When the above N is infinite or greater than a set threshold such as 20,000, it can be considered that the direction of the second area is designed to be unlimited; when N is finite and less than or equal to a set threshold (e.g., 20,000, 360, 24, etc.), it can be considered that the direction of the second area is designed to be limited.

For example, with continued reference to FIG. 4a or FIG. 5, the second area 513 is assumed to be an area enclosed by a circular ring at the outermost portion of the limit zone. If the circumferential angle corresponding to the assumed second area 513 (which is 360°, viewed around the center of the limit zone 51 (i.e., the center point 0)) is divided into 24 parts at equal intervals, that is, the direction of the second area 513 is divided into 24 directions, and each change by 15° in the second area 513 means a change in direction, at which time a speed value may be set for the robot in every other direction based on the maximum moving speed V supported by the robot. In other words, a speed value may be set at each 15° interval in the second area 513. Specifically, the data expression for the correspondence between direction and speed (i.e., angle and speed) is Formula 3 as below:

$$\text{Formula 3: Speed } v = \frac{V}{24} * n, \quad 15^\circ * (n-1) \le \theta < 15^\circ * n,$$

where n=1, 2, ..., 24
where the above V is the maximum moving speed supported by the robot; and the angle 0 represents the deflection angle of the draggable widget relative to the reference direction.

The above Formula 3 may also be characterized by the following Table 1:

Table 1

| Angle θ | Speed v |
|---|---|
| 0≤θ<15° | $\frac{V}{24} * 1$ |
| 15°≤θ<30° | $\frac{V}{24} * 2$ |
| ....... | ...... |
| 345°≤θ<360° | $\frac{V}{24} * 24$ |

Based on the above Formula 3, assuming that the second area 513 shown in FIG. 5a is fixed, if a specific position of the draggable widget 511 in the second area 513 is as shown in FIG. 5a, the deflection angle of the draggable widget relative to the reference direction is 45°, and the moving speed determined for the movement of the robot is (V/24)*3.

If the implementation 22 is adopted, i.e., determining the moving speed according to a rotation angle and a rotation direction corresponding to the rotation operation triggered on the second area, the prerequisite is that the second area as designed is rotatable. In this case, the user drags the draggable widget to a first position in the second area and stops, and then the draggable widget can be released. At this time, the draggable widget will be fixed at the first position in the second area when it was released, that is, the deflection angle of the draggable widget relative to the reference direction remains fixed. Thereafter, the user can rotate the second area, where the rotation direction may decide whether to perform a speed increase or speed decrease control on the robot, and the rotation angle may decide a magnitude of the speed increase or decrease. For example, when rotating clockwise, the greater the rotation angle, the greater the moving speed; and when rotating counterclockwise, the greater the rotation angle, the smaller the moving speed. That is, there is a one-to-many correspondence between the deflection angle (or the target direction) and the moving speed.

During specific implementation, like some contents described above in the implementation 21 related to that the preset correspondence between angle and speed may be established based on the number of directions into which the direction of the second area is divided and the maximum moving speed supported by the robot, in this implementation 22, a correspondence among rotation angle, rotation direction and speed will also be established in advance based on the number of directions into which the direction of the second area is divided and the maximum moving speed supported by the robot.

For example, assuming that the second area 513 shown in FIG. 5a is rotatable, a baseline of the second area (an extension line of the baseline passes through the center of the limit zone) is taken as a starting position for division, and the circumferential angle corresponding to the second area 513 (which is 360°, viewed around the center of the limit zone 51 (i.e., the center point 0)) is divided into 24 parts at equal intervals, that is, the direction of the second area 513 is divided into 24 directions. Each time the user rotates the second area 513, a corresponding rotation angle is 15o, that is, there is a change in direction. In conjunction with the maximum moving speed V supported by the robot, the mathematical expressions for the established correspondence among rotation angle, rotation direction and speed may be Formula 4 and Formula 5 as below:

When rotating clockwise, Formula 4 is speed $v = v_0 + \dfrac{V}{24} * \dfrac{\Phi}{15°}$

When rotating counterclockwise, Formula 5 is speed $v = v_0 - \dfrac{V}{24} * \dfrac{\Phi}{15°}$

where $V_0$ represents an initial speed corresponding to the first position of the draggable widget before the user performs a rotation operation on the second area; $\Phi$ represents a rotation angle corresponding to the rotation operation that the user performs on the second area; and speed V represents a moving speed determined according to the rotation angle and the rotation angle.

It should be additionally noted here that before the user performs any rotation operation on the second area, that is, when the second area is in a default state, the baseline of the second area may be in an overlapping state with the reference direction. For example, the baseline may be a line passing through a center of the "lock" graphic displayed on the second area and the center of the limit zone. In addition, in order to facilitate the user to clearly know rotating the second area in which direction can control the robot speed to increase or decrease, a display color of the second area may be used to prompt the user for rotating clockwise to increase the robot's moving speed, rotating counterclockwise to decrease the robot's moving speed, and the like.

For example, after the user drags the draggable widget 511 to a position in the second area as shown in FIG. 5a and releases the draggable widget 511, this draggable widget 511 will be fixed at the position shown in FIG. 5a. At this time, a prompt message such as "please rotate the second area to select a speed of movement for the robot" may be displayed. If an initial speed of the robot is 0 at this time, as shown in FIG. 5b, the user rotates the second area clockwise by 30°, then based on Formula 4, it can be determined that a moving speed is V/12, and the robot is controlled to move on the surface of the job object at the moving speed of V/12 in a direction of 45° north by east. Further, if the user feels that the speed of movement of the robot is too slow and thus rotates the second area clockwise by another 15°, then based on Formula 4, it can be determined that the moving speed is V/8 (i.e., V/12 + V/24), at which time the robot is controlled to move at the moving speed of V/8 in the direction of 45° north by east, increasing the speed of movement of the robot. Still further, if the user feels that the speed of movement of the robot is too fast so that the job performance effect is poor, and thus rotates the second area counterclockwise by 30°, then based on Formula 5, it can be determined that the moving speed is V/24 (i.e., V/8 - V/12), at which time the robot is controlled to move at the moving speed of V/24 in the direction 45° north by east, decreasing the speed of movement of the robot.

If the implementation 23 is adopted, i.e., determining the second preset speed as the moving speed, this second preset speed may be flexibly set according to actual conditions, as long as the second preset speed is guaranteed not to exceed the maximum moving speed supported by the robot. This second preset speed may be the same as or different from the above first preset speed, which is not limited here. Additionally, under this implementation 23, the second area may be designed to be fixed and non-rotatable.

By adopting this implementation 23 and the above implementation 12 to determine the moving speed, the moving speed will be the same regardless of the direction in which the robot is controlled to move.

After the moving speed is determined, the determined moving speed may be sent to the robot, so that the robot moves at this moving speed when moving on the surface of the job object according to the adjusted orientation posture.

With the above contents, by determining the moving speed for the robot based on the area to which the operation termination position belongs on the interface, this embodiment can implement multiple controls over the speed at which the robot moves, providing the user with diverse speed control capabilities.

Further, if it is detected that the user has triggered a release operation for the sliding operation at the operation termination position, in simple words, a release operation is triggered for the draggable widget at the operation termination position and the draggable widget is no longer touched, then the robot can also be controlled to stop moving or continue moving based on the sliding distance described above. Based on this, the method provided in this embodiment may further include the following steps:

S04. controlling, in response to a release operation for the sliding operation at the operation termination position and according to the sliding distance, the robot to stop moving or to keep moving at the moving speed in the target direction.

During specific implementation, if it is determined according to the sliding distance that the draggable widget is in the first area of the limit zone, then the draggable widget, when released, will return to an initial position, that is, the central position in the limit zone, and the robot will stop moving; and if it is determined according to the sliding distance that the draggable widget in the second area of the limit zone, then the draggable widget, when released, can be locked to allow the robot to continue moving.

A specific implementation regarding how to lock the draggable widget will be described in detail below and will not be repeated here.

Further, considering that when the robot is on a surface of the job object to perform the job task in practice, the robot may be on the inner surface of the job object or on the outer surface of the job object, for different surfaces where the robot is located, the user is currently often required to input different control information (e.g., a direction of movement) according to the actual surface on which the robot is doing a job, so as to guarantee that the robot can carry out the job correctly according to the control information input by the user. For example, in conjunction with FIG. 1b, if the robot (a window cleaning robot) is on the outer surface 22 of the glass window, and the user wants the robot to clean to the left, then rightward control information need be input so as to enable the robot to move in the correct direction for the job, which is extremely inconsistent with the user's operating habits and makes it extremely inconvenient for the user to use. In this embodiment, in order to guarantee that the user can directly operate the draggable widget according to an inner surface perspective habit to control the correct movement of the robot regardless of whether the robot is on the inner surface or the outer surface of the job object, the solution provided in this embodiment is to display a graphic element on the interface for the user to select a robot view as currently seen, and the graphic element is used for reflecting whether the robot is on the outer surface or the inner surface of the job object. Subsequently, when the robot is controlled to move, in addition to controlling the robot according to the control information input by the user by operating the draggable widget, the robot will also be controlled in conjunction with the surface of the job object where the robot is located. The surface of the job object where the robot is located can be determined by monitoring a selection operation triggered by the user on the graphic element on the interface, and the selected graphic element can also be displayed on the draggable widget, so that the graphic element displayed on the draggable widget can also express whether the robot is on the outer surface or the inner surface of the job object.

Based on the above contents, the method provided in this embodiment further includes the following steps:

S11. determining a surface of a job object where the robot is located; and

S12. displaying, on the draggable widget, a graphic element reflecting the surface of the job object where the robot is located,

wherein the surface of the job object includes at least one of an inner surface facing the user and an outer surface opposite to the inner surface.

The above step S11 may be performed before responding to a touch-and-drag operation on the draggable widget. In a specific implementable solution, the above S11 "determining a surface of the robot where the robot is located" may specifically include:

S111. displaying at least one graphic element; one graphic element reflects that the robot is on one surface of the job object;

S112. determining a selected graphic element in response to a selection operation on the at least one graphic element; and

S113. determining, according to the selected graphic element, a surface of the job object where the robot is located.

For example, with reference to FIG. 3, after clicking a "manual remote control" widget 31 on the main interface 3 provided by the client, the user can first switch to a selection interface 4, on which two graphic elements 42 are displayed, namely a graphic element 421 and a graphic element 422. The graphic element 421 characterizes that what the user sees is a handle face (a top face) of the robot with a handle, which reflects that the robot is on the inner surface of the job object; and the graphic element 422 characterizes that what the user sees is a track face (a bottom face) of the robot, which reflects that the robot is on the outer surface of the job object. According to a robot view as seen from a current perspective, the user can select a graphic element 42 that matches the robot view as seen from the current perspective. Assuming that the user triggers a click operation on the graphic element 421, the execution subject will switch to the manual remote control interaction interface 5 in response to the click operation, and the above two graphic elements 42 will also be displayed on an upper portion of the manual remote control interaction interface 5, where a state of the graphic element 421 of the two graphic elements 42 is a selected state, and in addition, the execution subject will determine that the robot is on the inner surface of the job object according to the selected graphic element 421. Further assuming that the user triggers a click operation on the graphic element 422, the execution subject will switch to the manual remote control interaction interface 5' in response to the click operation, and the above two graphic elements 42 will also be displayed on an upper portion of the manual remote control interaction interface 5', where a state of the graphic element 422 of the two graphic elements 42 is a selected state, and the execution subject will determine that the robot is on the outer surface of the job object according to the selected graphic element 422.

Subsequently, if the user wants to change the robot view as seen from the current perspective, the user can directly click on the graphic elements 42 on the manual remote control interaction interface without returning to the selection interface 4.

Of course, in other embodiments, the selection interface 4 described above may not be provided. After clicking the "manual remote control" widget 31 on the main interface 3 provided by the client, the user directly switches to the manual remote control interaction interface 5, where the two graphic elements 42 described above are displayed, so that the user can directly select a graphic element 42 that matches the robot view as seen from the current perspective through the manual remote control interaction interface 5.

It should be additionally noted that when triggering a skip operation on the selection interface 4 described in the above example, the user can switch to a matching manual remote control interaction interface according to a default robot view as currently seen by the user. The default robot view as currently seen by the user may be the handle face of the robot or the track face of the robot, which is not limited in this embodiment. Preferably, what the user currently sees by default is the handle face of the robot. In other words, it is preferable that the robot is on the inner surface of the job object by default. Additionally, when the graphic elements 42 are displayed, prompt information may also be displayed near the graphic elements 42 to remind the user to select a robot view as seen from a current perspective. For example, with reference to FIG. 3, "please select a robot perspective you currently see" may be displayed in an area above the area where the graphic elements 42 are located on the selection interface 4.

In the above S12, the graphic element that reflects the surface of the job object where the robot is located as displayed on the draggable widget is the selected graphic element determined by executing the above steps S111 to S113. For example, continuing with the examples listed above for the steps S111 to S113, for the draggable widget 511 included on the manual remote control interaction interface 5, the graphic element displayed thereon is the selected graphic element 421.

In addition, in order to enable the user to directly understand posture information of the robot through the graphic element on the draggable widget, this embodiment can also use acquired orientation posture information of the robot to update the posture of the graphic element on the draggable widget. That is, further, the method provided in this embodiment may further include the following steps:

S13. acquiring orientation posture information of the robot; and

S14. updating a posture of a graphic element on the draggable widget according to the orientation posture information, so as to enable the updated graphic element on the draggable widget to reflect an orientation posture of the robot.

During specific implementation, the above orientation posture information of the robot is sent by the robot, and the robot can collect its own orientation posture through sensors provided on the body.

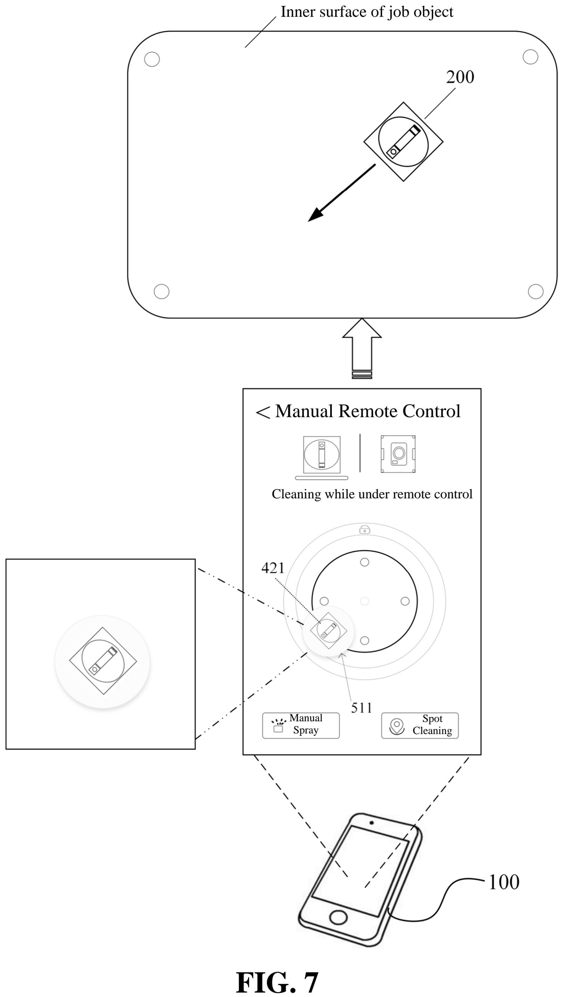

For example, with reference to FIG. 7, in a process where the robot 200 is working on the inner surface of the job object, it adjusts its own posture according to the target direction received from the client 100. The adjusted posture orientation of the robot is the direction indicated by the arrow in the figure. After the adjustment is completed, the robot will send the collected posture information of its own to the client 100, and then the client 100 updates the posture of the graphic element 421 on the draggable widget according to the received posture information of the robot, so that the posture of the graphic element 421 on the draggable widget is synchronized with the robot's orientation posture, so as to enable the updated graphic element on the draggable widget to reflect the posture of the robot. It should be noted that in order to make it easier to see that the posture of the graphic element 421 on the draggable widget is synchronized with the orientation posture of the robot, an enlarged view of the draggable widget 511 is further shown on the left side of the manual remote control interaction interface 5 in FIG. 7.

Still further, considering that the current manual control of the robot to move on the surface of the job object basically requires the user to continuously operate corresponding controls on his own initiative, for example, if the user wants to control the robot to perform continuous upward movement on the surface of the job object, then the control provided on the application interface for controlling the robot to move upward must be manipulated all the time. Once the control is released, the robot will stop moving upward, which brings great inconvenience to the user. To solve this problem, by means of the limit zone and the draggable widget, this embodiment provides the user with two manners to control the robot, one of which is to control the robot by operating the draggable widget on his own initiative, and the other of which is to implement a constant speed and directional self-movement control over the robot by locking the draggable widget. Specifically, with reference to FIG. 4a, when there is the need to use the robot to clean a small area surface, the user may perform real-time operations on the draggable widget 511 on his own initiative within the first area 512 included in the limit zone to control the movement of the robot. For example, the draggable widget 511 may be dragged within the first area 512 to the positive direction of the x-axis (which is the positive right direction, i.e., the true east direction), and when the dragging is stopped (during which the user keeps touching the draggable widget all the time), the robot will perform a movement to a positive right direction of the surface where it is located; and when the robot is used to clean a surface with a large area, such as a large floor-to-ceiling glass window with a height greater than a first threshold (e.g., 3 meters) and/or a width greater than a second threshold (e.g., 1.5 meters), the user may drag the draggable widget 511 onto the second area 513 to lock the draggable widget, thereby implementing an autonomous constant speed and directional movement control over the robot. For example, in conjunction with FIG. 5a, if the user wants the robot to continuously move in a direction of 45° north by east on the glass window surface to which it is attached, then the draggable widget 511 may be dragged into the second area 513 and rotated clockwise to a position at a deflection angle of 45° relative to the positive direction of the y-axis (which is a reference direction, i.e., the true north direction). When the draggable widget 511 enters the second area 513, a lock control function corresponding to the second area 513 will be activated, and a graphic element originally displayed on the draggable widget 511 for characterizing a robot view seen by the user (i.e., for reflecting the surface of the job object where the robot is located) will also disappear at the same time, or may not disappear, of course, which is not limited here; and when the user releases releases the draggable widget 511, the draggable widget 511 will be in a locked state, and the robot will move autonomously at a fixed speed in a direction of 45° north by east on the glass window surface to which it is adheres. For determination of the fixed speed, reference may be made to the relevant contents above.

Based on the above contents, when the draggable widget is within the second area of the limit zone, the method provided in this embodiment may further include the following steps:

S21. updating a display state of the second area to reflect that a lock control function corresponding to the second area is activated; wherein the lock control function is used for locking the draggable widget to control the robot to perform autonomous directional constant-speed movement; and

S22. allowing a graphic element on the draggable widget that reflects a surface of a job object where the robot is located to disappear or remain displayed.

In the above S21, the display state of the second area may be updated by, but not limited to, changing a color of the second area.

For example, with reference to FIG. 4a, in a case where the draggable widget 511 is in the first area 512 and has not entered the second area 513, the display color of the second area 513 may be a first color to reflect that the lock control function corresponding to the second area is in a nonactivated state; further, as shown in FIG. 5a, when the draggable widget 511 is detected to enter the second area 513, the display color of the second area is updated from the first color to a second color to reflect that the lock control function corresponding to the second area is in an activated state.

It should be additionally noted that, in addition to updating the display state of the second area, a display state of the first area may also be updated to reflect that the draggable widget has been dragged out of the first area. Specifically, the display state of the first area may be updated by, but not limited to, changing a boundary color of the first area or changing a boundary appearing state of the first area. For example, with continued reference to FIGS. 4a and 5a, when the draggable widget is in the first area, a boundary of the first area appears, and the boundary color is a third color; further, when it is detected that the draggable widget is not in the first area but is dragged into the second area, the boundary of the first area may disappear or the boundary color may be updated from the third color to a fourth color.

In the above S22, for example, with continued reference to FIGS. 4a and 5a, when the draggable widget 511 enters the second area 513, the graphic element 421 originally displayed on the draggable widget 511 for reflecting that the robot is on the inner surface on the job object will disappear. Of course, as shown in FIG. 5b, the graphic element 421 originally displayed on the draggable widget 511 for reflecting the robot is on the inner surface of the job object may also remain displayed continuously, which is not limited here.

In addition, under the prerequisite described above (i.e., the draggable widget is in the second area), the method provided in this embodiment may further include the following steps:

S23. locking the draggable widget in a case where a release operation for the sliding operation is detected at the operation termination position, and updating a display state of the draggable widget to reflect that the draggable widget is in a locked state.

For detailed explanation of the release operation, reference may be made to the contents relevant to the above step S04.

EP 4 711 909 A1

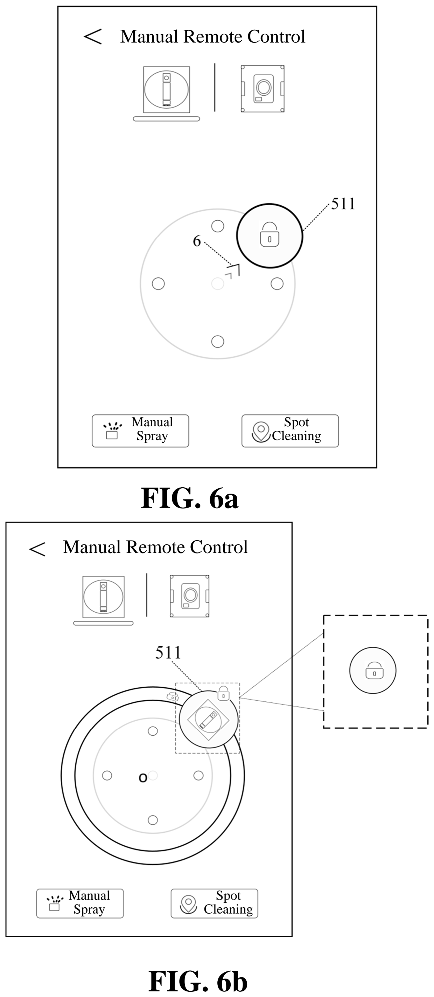

For example, with reference to FIGS. 5a and 6a, in a case where the second area is fixed and non-rotatable, when it is detected that the user releases the draggable widget (the touch ends and the draggable widget is released), the draggable widget may be locked on the boundary of the first area. Specifically, according to the operation termination position, such as the position of the draggable widget 511 on the second area 513 when the user releases it as shown in FIG. 5a, the draggable widget 511 may be locked on the boundary of the first area at a position closest to and in a same line with the operation termination position (as in FIG. 6a), so as to guarantee that a deflection angle of the locked draggable widget relative to the reference direction is consistent with a deflection angle of the released draggable widget 511 relative to the reference direction. In the locking process, the display state of the draggable widget may also be updated. As in FIG. 6a, a locking graphic element may be added to the draggable widget 511, which may be, for example, a "lock" graphic; a boundary color of the draggable widget may be updated from a fifth color to a sixth color; and an indicator for indicating a deflection angle direction of the draggable widget may be displayed near the draggable widget (e.g., some arrows 6 shown in FIG. 6a); and so on, which are not limited here, as long as the updated display state of the draggable widget can reflect that the draggable widget is in the locked state. In addition, when the draggable widget is locked, the second area 513 will also disappear.

For another example, as shown in FIGS. 5b and 6b, in a case where the second area is rotatable, when it is detected that the user releases the draggable widget, the draggable widget may be fixed at a corresponding position in the second area where it is located when released. In addition, the display state of the draggable widget may also be updated, as in FIG. 6b. A locking graphic element may be added on the boundary of the draggable widget 511, or the graphic element originally displayed on the draggable widget 511 may be updated to a locking graphic; the boundary color of the draggable widget 511 may be changed; and so on, which are not limited here either, as long as it is guaranteed that the updated display state of the draggable widget can reflect that the draggable widget is in the locked state.

Based on the above examples, in a specific implementable technical solution, "locking the draggable widget" in the above S23 may be implemented by adopting the following steps:

S231. fixing, according to the operation termination position, the draggable widget at a target position on a boundary of the first area, wherein the target position is closest to and in a straight line with the operation termination position;

S232. allowing the second area to disappear.

In another specific implementable technical solution, "locking the draggable widget" in the above S23 may be implemented by adopting the following step:

S231'. fixing the draggable widget at the operation termination position.

It should be additionally noted here that after the draggable widget is locked, lock prompt information may also be displayed on the interface, such as on the draggable widget, which may be in text form, for example, "locked travel in progress"; or a vibration prompt can be issued to remind that the draggable widget is fixed (locked), so that the user can intuitively know from the vibration prompt that the draggable widget has been fixed, and the human-computer interaction is more efficient in controlling the robot.

When the draggable widget is in the locked state, the user may perform operations such as clicking at any position on the limit zone to unlock the draggable widget. It should be noted that in the case where the second area is rotatable, in order to avoid unintended unlocking from occurring due to the user's intention to rotate the second area, an unlocking manner provided in this embodiment is that the user may perform operations such as clicking at any position in other areas of the limit zone except the second area to unlock the draggable widget.

Alternatively, the draggable widget may also be automatically unlocked in a case where it is determined that the robot has stopped moving. The unlocked draggable widget may return to the default position, namely the central position of the limit zone. Additionally, after the draggable widget is unlocked, if the second area is in a disappearing state, the second area that has disappeared will also appear again.

That is, the method provided in this embodiment may further include the following steps:

S24. unlocking the draggable widget when it is detected that an unlocking condition is met, and returning the draggable widget to the central position of the second area; and

S25. allowing the second area to appear if the second area is in a disappearing state;

wherein the unlocking condition includes at least one of: receiving movement stop information sent by the robot, and monitoring an operation triggered on the limit zone (more specifically, detecting an operation triggered on a remaining area of the limit zone except the second area).

During specific implementation, the above reasons that cause the robot to stop moving may be, but not limited to:

17

a collision of the robot with an obstacle on the surface of the job object, a failure of a sensor (e.g., an infrared sensor) on the robot, a short circuit in the robot, and the like. The obstacle on the surface of the job object may be a static obstacle or a dynamic obstacle. For example, by taking as an example a case in which the robot is a window cleaning robot and the job object is a facade glass window, the obstacle may be a frame of the glass window, a hook pasted on the glass window, a thicker sticker, and the like. By taking as an example a case in which the robot is a floor sweeping robot and the job object is a flat ground, the obstacle may be a wall body, a table and chair, a walking man, and the like.

The operations triggered on the limit zone may be click, long press, sliding and other operations, which are not limited here.

After the locking condition is met as determined and the draggable widget is unlocked, in addition to returning the draggable widget to the central position of the second area, the graphic element for reflecting that the robot is on the surface of the job object may be displayed again on the draggable widget, and the posture of the graphic element may be synchronized with the orientation posture of the robot, so that the graphic element on the draggable widget can reflect the posture of the robot. For the specific implementation of synchronizing the posture of the graphic element on the draggable widget with the orientation posture of the robot, reference may be made to the relevant contents above, which will not be repeated here. In addition, if the original second area is in the disappearing state, the second area may also appear again.

As can be seen from the above contents, after the draggable widget is unlocked, the interface may return to an initial state, such as to the manual remote control interaction interface 5 shown in FIG. 3.

In summary, this embodiment utilizes the second area of the limit zone to enable locking of the draggable widget, and after the draggable widget is locked, even if the user does not perform any operation, the execution subject of this embodiment can still control the robot to move continuously on the surface of the job object and perform the job task according to the direction and speed corresponding to the position where the locked draggable widget is located. When the user uses the client to remotely control the robot, this, in addition to providing the function of remotely controlling the robot in any direction, provides the user with an omnidirectional autonomous directional constant-speed movement function, so that the user does not need to operate the client all the time, and the robot can be allowed to automatically travel along a fixed direction at a fixed speed on the surface of the job object, which is beneficial to reducing the user's operating burdens, improving the remote control (human-computer interaction) efficiency, lowering remote control costs, and providing the user with very friendly human-computer interaction especially when the robot is controlled to carry out a job on a job object with a large surface area.

The above mainly introduces the solutions of the present application from the perspective of providing the omnidirectional control function for the robot. The following will introduce the solutions of the present application from other perspectives in conjunction with other embodiments.

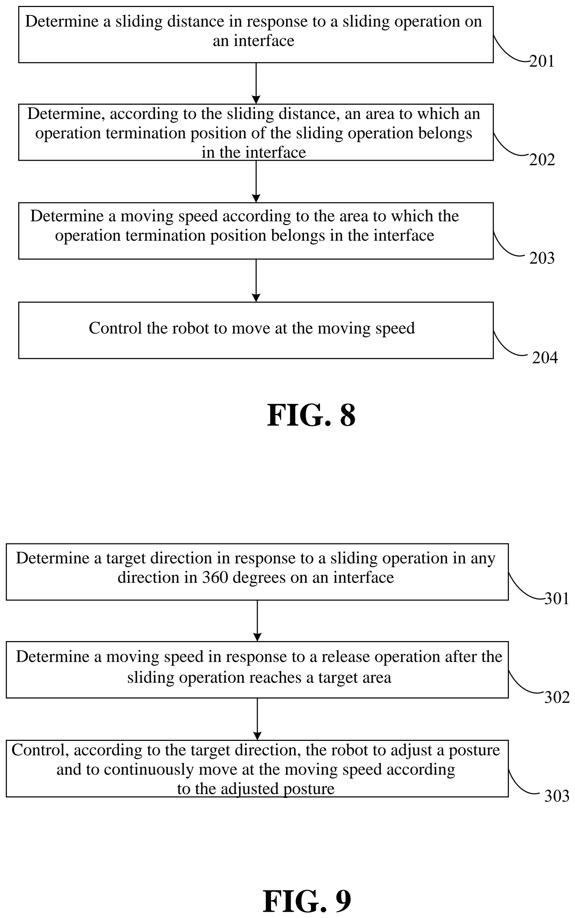

FIG. 8 is a schematic flow chart of a robot control method provided in an embodiment of the present application. An execution subject of this method is a client. For details of the client, reference may be made to the relevant contents in other embodiments above. As shown in FIG. 8, the robot control method provided in this embodiment includes the following steps:

201. determining a sliding distance in response to a sliding operation on an interface;

202. determining, according to the sliding distance, an area to which an operation termination position of the sliding operation belongs in the interface;

203. determining a moving speed according to the area to which the operation termination position belongs in the interface; and

204. controlling the robot to move at the moving speed.

For details of specific implementations of the above 201 to 204, reference may be made to the relevant contents in other embodiments above, which will not be repeated here.

According to the technical solution provided in this embodiment, the moving speed can be determined based on the sliding distance determined in response to the sliding operation on the interface, and then the robot can be controlled to move at this moving speed. Based on the sliding distance, this solution can implement multiple controls over the speed at which the robot moves, providing a user with diverse speed control capabilities.

It should be additionally noted here that the robot control method provided in this embodiment may include other steps in addition to the steps shown above. For other steps that may be specifically included, reference may be made to the steps in other robot control methods provided above in the present application, which will not be repeated here.

FIG. 9 is a schematic flow chart of a robot control method provided in still another embodiment of the present application. An execution subject of this method is a client. For details of the client, reference may be made to the relevant contents in other embodiments above. As shown in FIG. 9, the robot control method provided in this embodiment includes the following steps:

301. determining a target direction in response to a sliding operation in any direction in 360 degrees on an interface;

302. determining a moving speed in response to a release operation after the sliding operation reaches a target area; and

303. controlling, according to the target direction, the robot to adjust a posture and to continuously move at the moving speed according to the adjusted posture.

The sliding operation performed in any direction in 360 degrees on the interface as described above may refer to a touch-and-drag operation triggered by a user on the draggable widget 511 in the limit zone in any direction in 360 degrees in the limit zone included in the interface.

The target area refers to a second area of the limit zone, and this target area is associated with a lock control function that is used for locking an operation termination position of the sliding operation in a case where the release operation is detected. During specific implementation, the operation termination position of the sliding operation may refer to a position of the draggable widget in the target area in a case where the draggable widget is released after being dragged to the target area. Accordingly, locking the operation termination position of the sliding operation may be implemented by locking the draggable widget.

For details of specific implementations of the above 301 to 303, reference may be made to the relevant contents in other embodiments above, which will not be repeated here.

According to the technical solution provided in this embodiment, after a target direction is determined in response to a sliding operation in any direction in 360 degrees on an interface, and a moving speed is determined in response to a release operation after the sliding operation reaches a target area, a robot can be controlled according to the target direction to adjust a posture and to continuously move at the determined moving speed in the adjusted posture. After a user performs the sliding operation to reach the target area, this solution can implement control over the continuous movement of the robot even if the user is not performing any operations, which is beneficial to reducing the user's operating burdens, improving the remote control (human-computer interaction) efficiency, lowering remote control costs, and providing the user with very friendly human-computer interaction especially when the robot is controlled to conduct a job on a job object with a large surface area.

It should be additionally noted here that the robot control method provided in this embodiment may include other steps in addition to the steps shown above. For other steps that may be specifically included, reference may be made to the steps in other robot control methods provided above in the present application, which will not be repeated here.

Still another embodiment of the present application further provides a robot control method, which is applicable to a client. Specifically, the robot control method provided in this embodiment includes the following steps:

401. displaying, on an interface, a manipulation control including a limit zone and a draggable widget on the limit zone that can be dragged in any direction;

402. controlling, in a case where it is detected that the draggable widget is triggered to move in any direction in 360 degrees on the limit zone, a robot to follow a corresponding target direction when the draggable widget stops moving, to adjust a moving direction and to move in the adjusted moving direction;

403. releasing the draggable widget in a case where it is detected that movement of the draggable widget is stopped within a first area of the limit zone, and returning the draggable widget to a set position to control the robot to stop moving; and

404. releasing the draggable widget in a case where it is detected that movement of the draggable widget is stopped within a second area of the limit zone, and locking the draggable widget to control the robot to maintain moving in the adjusted moving direction; wherein the second area is outside the first area.

The draggable widget being triggered as described above refers to that the draggable widget is touched or dragged as described in other embodiments above. When the robot is controlled to adjust the moving direction, an adjustment to the moving direction may be implemented specifically by controlling the robot to follow a corresponding target direction when the draggable widget stops moving, and adjust its own posture. The set position may refer to a central position of the limit zone.

For details of specific implementations of the above 401 to 404, reference may be made to the relevant contents in other embodiments above.

It should be additionally noted here that the robot control method provided in this embodiment may include other steps in addition to the steps shown above. For other steps that may be specifically included, reference may be made to the steps in other robot control methods provided above in the present application, which will not be repeated here.

The technical solutions provided in the present application will be explained below in conjunction with specific application scenarios by taking as an example a case in which the robot is a window cleaning robot for cleaning glass window surfaces.

After adhering the window cleaning robot to a position on an inner surface of the glass window and turning on the switch, the user clicks a "manual remote control" widget 31 on a main interface 3 provided by the client as shown in FIG. 3 to start a manual remote control function for the window cleaning robot, so as to first access a robot state selection interface 4 as shown in FIG. 3, to click, according to a window cleaning robot view seen from his current perspective, a graphic element 421 for reflecting that the window cleaning robot is on the inner surface of the glass window, and then switch to a manual remote control interaction interface 5 as shown in FIG. 3.

When remotely controlling the window cleaning robot through the manual remote control interaction interface 5, the user may touch and drag a draggable widget 511 in any direction in a limit zone 51 to remotely control the window cleaning robot to move on the inner surface of the glass window for performing a cleaning task. Specifically, when the draggable widget 511 is dragged along the positive direction of the x-axis to the position shown in FIG. 4a, the draggable widget 511 is in the first area of the limit zone, and then the window cleaning robot may adjust its own posture and move to the right at a fixed speed on the inner surface of the glass window. At the same time, the graphic element 421 on the draggable widget 511 may be synchronized with the orientation posture of the window cleaning robot. Further, when the draggable widget 511 is dragged to the position shown in FIG. 4b, the draggable widget 511 is still in the first area of the limit zone and at a deflection angle of -45° relative to a reference direction, namely of 45° north by west, and then the window cleaning robot may adjust its own posture on the inner surface of the glass window to make itself toward a direction of 45° north by west and to move at a fixed speed along the adjusted orientation. At the same time, the posture of the graphic element 421 on the draggable widget 511 may also be updated to synchronize the orientation posture of the window cleaning robot. Still further, when the user drags the draggable widget 511 to the position shown in FIG. 5a, the draggable widget 511 enters a second area of the limit zone and at a deflection angle of 45° relative to the reference direction. At this time, a lock control function of the second area is activated. When the user releases the draggable widget 511, this draggable widget 511 may be locked and thereby enter a locked state shown in FIG. 6a. The window cleaning robot may then adjust its own posture on the inner surface of the glass window to make itself toward a direction of 45° north by east and to start performing an autonomous directional constant-speed movement along the adjusted orientation to perform the window cleaning task, during which the user does not need to touch the draggable widget all the time. Yet further, after the user performs a click operation at any position in the limit zone shown in FIG. 6a, the manual remote control interaction interface may return to the remote control interaction interface 5 shown in FIG. 3.

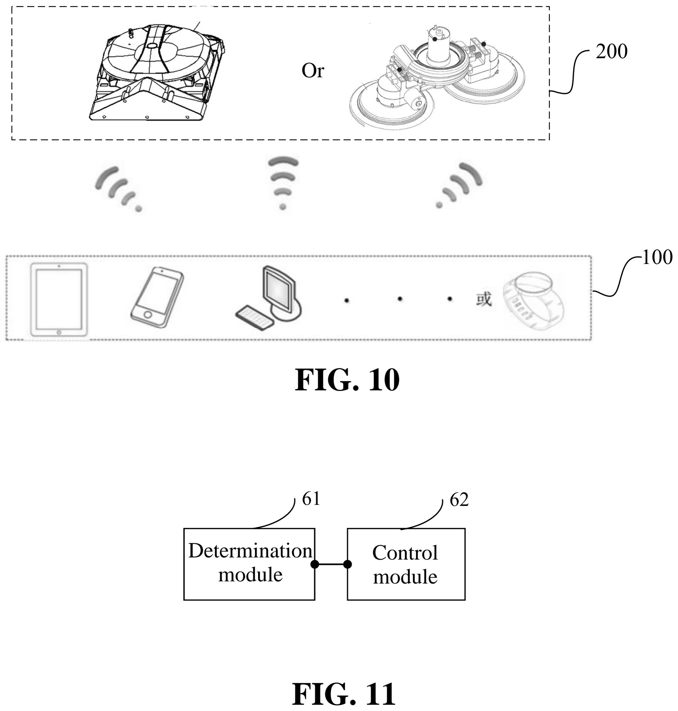

An embodiment of the present application further provides a robot control system. As shown in FIG. 10, the system includes:

a robot 200 for performing a job task on a surface of a job object; and

a client 100 in communication connection with the robot for implementing the steps or functions of the robot control methods provided above in the embodiments of the present application.

Reference may be made to the above contents for specific implementations of respective functions in the above client and robot. Additionally, in addition to the functions described above, the client may possess the functions corresponding to other steps in other embodiments above, for which reference may also be made to the above contents, and no repeated description will be provided here.

The above robot may be an adhesion-type surface cleaning robot, such as a window cleaning robot, for cleaning surfaces of various job objects. The job objects may be a vertical facade-type glass window, a tile wall face, and the like.

FIG. 11 shows a schematic structural diagram of a robot control apparatus provided in an embodiment of the present application. This robot control apparatus is deployed on a client. As shown in FIG. 11, the robot control apparatus includes: a determination module 61 and a control module 62; wherein,

the determination module 61 is used for determining a target direction in response to a sliding operation in any direction in 360 degrees on an interface; and further for determining a moving speed according to an area to which an operation termination position of the sliding operation belongs in the interface; and

the control module 62 is used for controlling, according to the target direction, a robot to adjust a posture and to move at the moving speed according to the adjusted posture.

Further, the determination module 61, when used for determining the target direction in response to the sliding operation, is specifically used for: determining an operation termination position of the sliding operation; and determining the target direction based on the operation termination position.

Further, the above determination module 61, when used for determining the moving speed according to the area to which the operation termination position of the sliding operation belongs in the interface, is specifically used for: determining a sliding distance based on the operation termination position; determining, according to the sliding distance, an area to which the operation termination position belongs in the interface; and determining the moving speed based on the area to which the operation termination position belongs in the interface.

Further, the above control module 62 is further used for: controlling, in response to a release operation for the sliding operation at the operation termination position and according to the sliding distance, the robot to stop moving or to keep moving at the moving speed in the target direction.

Further, the apparatus provided in this embodiment further includes: a display module for displaying, on the interface, a manipulation control including a limit zone and a draggable widget on the limit zone that can be dragged in any direction; and a response module for responding to the sliding operation, wherein the draggable widget moves within the limit zone according to the sliding operation; wherein the above operation termination position is a position on the limit zone where the draggable widget is located when stops moving;

Further, the above determination module 61, when used for determining the target direction based on the operation termination position, is specifically used for: determining, based on the operation termination position, a deflection angle of the draggable widget relative to a reference direction; and determining the target direction according to the deflection angle.

Further, the above determination module 61, when used for determining the sliding distance based on the operation termination position, is specifically used for: calculating a distance between the operation termination position and a central position of the limit zone to determine the same as the sliding distance; and when used for determining, according to the sliding distance, the area to which the operation termination position belongs in the interface, it is specifically used for: determining, according to the sliding distance, an area where the draggable widget is located in the limit zone; and determining the area where the draggable widget is located in the limit zone as an area to which the operation termination position belongs in the interface; and when used for determining the moving speed based on the area to which the operation termination position belongs in the interface, it is specifically used for: determining the moving speed based on the area where the draggable widget is located in the limit zone.

Further, the above determination module 61, when used for determining the moving speed based on the area where the draggable widget is located in the limit zone, is specifically used for:

if the draggable widget is in the first area of the limit zone, determining the moving speed according to the sliding distance; or determining a first preset speed as the moving speed; and

if the draggable widget is in the second area of the limit zone, determining the moving speed according to the deflection angle; or determining the moving speed in response to a rotation operation on the second area and according to a rotation angle and a rotation direction corresponding to the rotation operation; or determining a second preset speed as the moving speed.

Further, when the draggable widget is in the second area of the limit zone, the apparatus provided in this embodiment may further include: an update module for updating a display state of the second area to reflect that a lock control function corresponding to the second area is activated; wherein the lock control function is used for locking the draggable widget to control the robot to perform autonomous directional constant-speed movement; and a disappearance/retention control module for allowing a graphic element on the draggable widget that reflects a surface of a job object where the robot is located to disappear or remain displayed.

Further, the apparatus provided in this embodiment further includes: a locking module for locking the draggable widget when a touch end operation on the draggable widget is detected; and the above update module is further used for updating a display state of the draggable widget to reflect that the draggable widget is in a locked state.

Further, the above locking module, when used for locking the draggable widget, is specifically used for: fixing, according to the operation termination position, the draggable widget at a target position on a boundary of the first area, wherein the target position is closest to and in a straight line with the operation termination position; allowing the second area to disappear; or fixing the draggable widget at the operation termination position.

Further, the apparatus provided in this embodiment further includes: an unlocking module for unlocking the draggable widget when it is detected that an unlocking condition is met, and returning the draggable widget to the central position of the limit zone; and a display module for allowing the second area to appear if the second area is in a disappearing state; wherein the unlocking condition includes at least one of: receiving movement stop information sent by the robot, and monitoring an operation triggered on the limit zone.

Further, the above determination module 61 is further used for determining a surface of a job object where the robot is located; and the above display module is further used for displaying, on the draggable widget, a graphic element reflecting the surface of the job object where the robot is located; wherein the surface of the job object includes at least one of an inner surface facing the user and an outer surface opposite to the inner surface.

Further, the above determination module 62, when used for determining the surface of the job object where the robot is located, is specifically used for: displaying at least one graphic element; a graphic element is used for reflecting that the robot is on a surface of the job object; determining a selected graphic element in response to a selection operation on the at least one graphic element; and determining, according to the selected graphic element, a surface of the job object where the robot is located; wherein a graphic element displayed on the draggable widget is the selected graphic element.

Further, the apparatus provided in this embodiment further includes: an acquisition module 6 for acquiring posture information of the robot; and updating a posture of a graphic element on the draggable widget according to the posture information, so as to enable the graphic element on the draggable widget to reflect a posture of the robot.

It should be noted here that for the contents not detailed for the steps in the robot control apparatus provided in this embodiment, reference may be made to the corresponding contents in the above embodiments, which will not be repeated here. In addition, in addition to the above steps, the robot control apparatus provided in this embodiment may further include some or all of other steps in the above embodiments. For details, reference may be made to the corresponding contents of the above embodiments, which will not be repeated here.

Another embodiment of the present application further provides a schematic structural diagram of a robot control apparatus. The robot control apparatus is deployed on a client. A specific structure of the robot control apparatus is similar to the structure shown in FIG. 11. Specifically, the robot control apparatus includes: a determination module and a control module; wherein,

the determination module is used for determining a sliding distance in response to a sliding operation on an interface; and determining, according to the sliding distance, determining, according to the sliding distance, an area to which an operation termination position of the sliding operation belongs in the interface; and determining a moving speed according to the area to which the operation termination position belongs in the interface; and

the control module is used for controlling the robot to move at the moving speed.

It should be noted here that for the contents not detailed for the steps in the robot control apparatus provided in this embodiment, reference may be made to the corresponding contents in the above embodiments, which will not be repeated here. In addition, in addition to the above steps, the robot control apparatus provided in this embodiment may further include some or all of other steps in the above embodiments. For details, reference may be made to the corresponding contents of the above embodiments, which will not be repeated here.

Still another embodiment of the present application further provides a schematic structural diagram of a robot control apparatus. The robot control apparatus is deployed on a client. A specific structure of the robot control apparatus is similar to the structure shown in FIG. 11. Specifically, the robot control apparatus includes: a determination module and a control module; wherein,

the determination module is used for determining a target direction in response to a sliding operation in any direction in 360 degrees on an interface; and for determining a moving speed in response to a release operation after the sliding operation reaches a target area; and

the control module is used for controlling, according to the target direction, the robot to adjust a posture and to continuously move at the moving speed according to the adjusted posture.

In the above description, the target area is an area associated with a lock control function; and the lock control function is used for locking an operation termination position of the sliding operation in a case where the release operation is detected.

It should be noted here that for the contents not detailed for the steps in the robot control apparatus provided in this embodiment, reference may be made to the corresponding contents in the above embodiments, which will not be repeated here. In addition, in addition to the above steps, the robot control apparatus provided in this embodiment may further include some or all of other steps in the above embodiments. For details, reference may be made to the corresponding contents of the above embodiments, which will not be repeated here.

Yet another embodiment of the present application further provides a schematic structural diagram of a robot control apparatus. The robot control apparatus is deployed on a client. Specifically, the robot control apparatus includes: a display module and a detection and control module; wherein,

the display module is used for displaying, on an interface, a manipulation control including a limit zone and a draggable widget on the limit zone that can be dragged in any direction; and

the detection and control module is used for displaying, on an interface, a manipulation control including a limit zone and a draggable widget on the limit zone that can be dragged in any direction; and further for controlling, in a case where it is detected that the draggable widget is triggered to move in any direction in 360 degrees on the limit zone, a robot to follow a corresponding target direction when the draggable widget stops moving, to adjust a moving direction and to move in the adjusted moving direction; releasing the draggable widget in a case where it is detected that movement of the draggable widget is stopped within a first area of the limit zone, and returning the draggable widget to a set position to control the robot to stop moving; and releasing the draggable widget in a case where it is detected that movement of the draggable widget is stopped within a second area of the limit zone, and locking the draggable widget to control the robot to maintain moving in the adjusted moving direction; wherein the second area is outside the first area.

It should be noted here that for the contents not detailed for the steps in the robot control apparatus provided in this embodiment, reference may be made to the corresponding contents in the above embodiments, which will not be repeated here. In addition, in addition to the above steps, the robot control apparatus provided in this embodiment may further include some or all of other steps in the above embodiments. For details, reference may be made to the corresponding contents of the above embodiments, which will not be repeated here.

In addition, still another embodiment of the present application provides a client device. The client device includes a memory and a processor; wherein,

the memory stores one or more computer instructions; and
the processor is coupled with the memory for executing the one or more computer instructions to implement the steps of the robot control methods provided above in the present application.

The client device may be a cellphone, a computer, a smart phone, a tablet computer, a smart wearable device (e.g., a smart watch, glasses, etc.).

The above memory may be configured to store various other data to support operations on the client. Examples of the data include instructions for any application or method operating on the client. The memory may be implemented by any type of volatile or non-volatile memory device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

Further, in addition to including the memory and the processor, the client device includes other components, such as a power supply component, a communication component, a display, and the like.

Still another embodiment of the present application provides a computer program product (not shown in the corresponding drawings). The computer program product includes a computer program or instructions that, when executed by a processor, cause the processor to be able to implement the steps in the above method embodiments.

Accordingly, an embodiment of the present application further provides a computer-readable storage medium storing a computer program that, when executed by a computer, can implement the method steps or functions provided in the above embodiments.

In addition, other embodiments of the present application further provide a remote control method, apparatus and device for a surface cleaning robot, and a readable storage medium, which will be respectively described in detail below.

Currently, users often utilize hardware remote controls to remotely control surface cleaning robots. In a remote control process, a user holds a remote control to control a surface cleaning robot to move "forward", "left", "right", "backward", and the like. However, this remote control manner requires additional configuration of a hardware remote control for the surface cleaning robot, and the remote control is prone to being misplaced. Moreover, the hardware remote control generally includes four buttons, each button for controlling a different direction. For example, the four buttons correspond to four directions of "forward", "backward", "left" and "right" respectively. This hardware remote control requires the user to perform two-handed operation with one hand controlling the front/back movement and the other controlling the left/right movement. Moreover, in addition to the four directions of "forward", "backward", "left" and "right", the hardware remote control has no additional angle settings, resulting in the inability to remotely control the surface cleaning robot from multiple angles in a sensitive manner, and it would thus be difficult to control the surface cleaning robot to travel in a direction desired by the user.

Additionally, since a travelling mechanism of the surface cleaning robot is usually a track or the like, the surface cleaning robot often determines the front, back, left, and right directions according to track wheels. If the surface cleaning robot is initially positioned obliquely, and if the "forward" button is pressed at this time, the surface cleaning robot will move in a forward direction of the track wheels. But from the user's perspective, the surface cleaning robot is actually moving obliquely.

Moreover, if the surface cleaning robot is facing obliquely downward, then when the "forward" button is pressed, the surface cleaning robot moves obliquely downward, which is inconsistent with the user's desired direction and fails to achieve a desired WYSIWYG visual effect.

Based on this, the embodiments of the present application provide a remote control method, apparatus and device for a surface cleaning robot, and a readable storage medium. An APP of the surface cleaning robot is installed on an electronic device, and by operating the remote control widget on an APP interface, the surface cleaning robot is controlled within a 360-degree range to travel to any direction, so that the surface cleaning robot quickly faces a direction desired by the user, making the operation simple and efficient and improving the cleaning efficiency and quality.

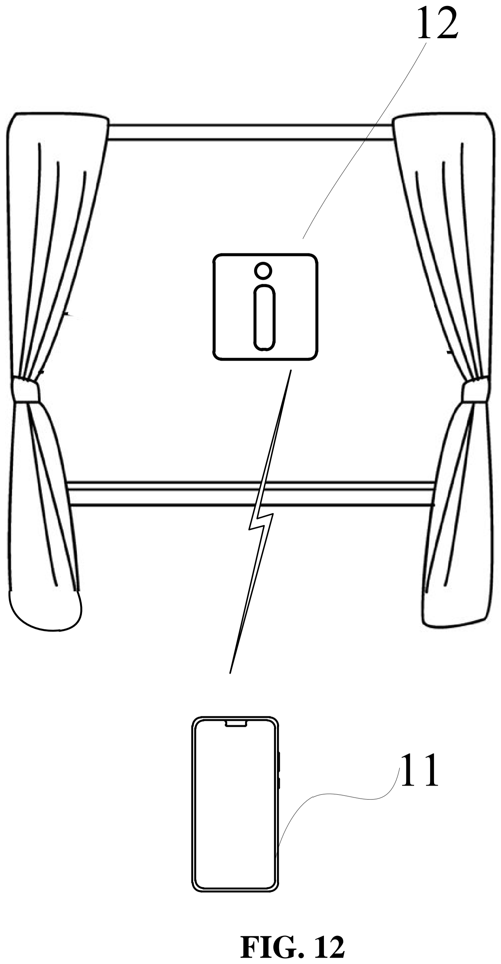

FIG. 12 is a schematic scenario diagram of a remote control method for a surface cleaning robot provided in an embodiment of the present application. With reference to FIG. 12, an APP for remotely controlling a surface cleaning robot 12 is installed on an electronic device 11, and the surface cleaning robot is adhered on a working side such as a window. In a cleaning process, a user calls up a remote control page through the APP on the electronic device 11, on which an operable remote control widget is set on the remote control page. The user controls a travelling direction of the surface cleaning robot 12 by sliding the remote control widget.

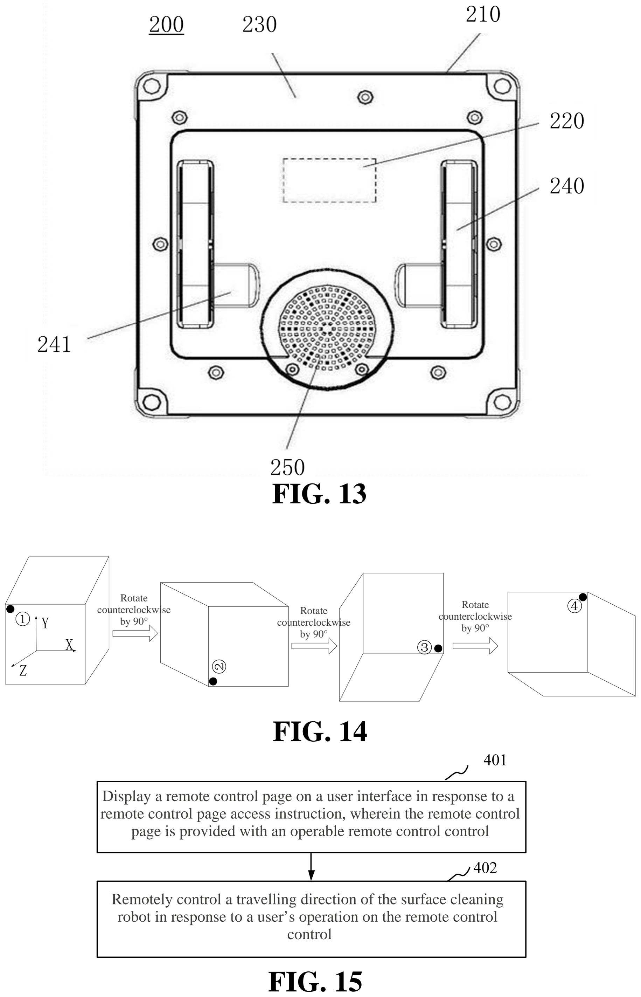

FIG. 13 is a bottom view of a surface cleaning robot provided in an embodiment of the present application, which is remotely controlled by an electronic device. With reference to FIG. 13, a surface cleaning robot 200 provided in an embodiment of the present application includes a body 210, as well as a memory and a processor 220 provided inside the body 210. A bottom of the body 210 is further provided with a cleaning component 230 for cleaning a working side, a travelling mechanism 240 for driving the surface cleaning robot to travel, an adhesion component 250 for allowing the surface cleaning robot to be adhered on the working side, and a drive motor 241 for driving the travelling mechanism 240, and the like.

In the embodiment of the present application, an acceleration detector or the like is further provided inside or on a surface of the body 210. The acceleration detector is, for example, a three-axis acceleration sensor for acquiring three-axis acceleration data. The three-axis acceleration data is used for determining a posture of the surface cleaning robot, that is, an initial direction of the surface cleaning robot. The initial direction is a direction of the surface cleaning robot before it receives a remote control instruction carrying a desired angle from an electronic device such as a mobile phone. The default initial direction is a direction in which a tail of the surface cleaning robot points to a head thereof before it receives the remote control instruction.

FIG. 14 is a schematic diagram of a rotation process of a three-axis acceleration sensor of the surface cleaning robot. Table 1 is a three-axis acceleration data table.

Table 1

| Position | ① | | ② | | ③ | | ④ | | ⑤ | | ⑥ | |
|---|---|---|---|---|---|---|---|---|---|---|---|---|
| Resolution (bits) | 12 | 8 | 12 | 8 | 12 | 8 | 12 | 8 | 12 | 8 | 12 | 8 |
| X (counts) | 0 | 0 | 512 | 32 | 0 | 0 | -512 | -32 | 0 | 0 | 0 | 0 |
| Y (counts) | 512 | 32 | 0 | 0 | -512 | -32 | 0 | 0 | 0 | 0 | 0 | 0 |
| Z (counts) | 0 | 0 | 0 | 0 | 0 | 0 | 0 | 0 | 512 | 32 | -512 | -32 |

With reference to FIG. 14 and Table 1, if the three-axis acceleration sensor is rotated 90° counterclockwise, positions of a reference point P on the three-axis acceleration sensor are shown by black filled circles ① to ④, and the three-axis acceleration data are shown by ① to ④ in Table 1, respectively. In Table 1, resolution characterizes the ability of the three-axis acceleration sensor to sense the minimum variation in the measured value. The greater the resolution, the smaller the minimum variation in the measured value that can be sensed.

In Table 1, ①-④ represent readings of the three axes when the three-axis acceleration sensor is in a perpendicular state. At this time, the data of the X axis and the date of the Y axis are varying all the time, while the data of the Z axis does not change. In Table 1, ⑤ represents three-axis readings when the three-axis acceleration sensor is in a horizontal state with the top face facing upward, and ⑥ represents three-axis readings when the three-axis acceleration sensor is in the horizontal state with the top face facing downward. When the three-axis acceleration sensor is in state ⑤ or ⑥, the data of the X-axis and the data of the Y-axis are 0, while the data of the Z-axis is a fixed value.

With reference to FIG. 14 and Table 1, when the surface cleaning robot is adhered on a facade, the data of the X-axis and Y-axis can be converted into a current angle of the surface cleaning robot, namely an initial direction. In this way, after each remote control instruction received from the electronic device, the surface cleaning robot can determine a turning direction, a user's desired direction, and so on.

The surface cleaning robot described in the embodiment of the present application may specifically be a window cleaning robot. The window cleaning robot is also referred to as an automatic window cleaning machine, a glass cleaning robot, a smart window wiper, a smart window cleaner, etc. However, the embodiment of the present application is not limited to glass cleaning, and the working side may be glass, mirror, plastic, metal, wood, etc.

Based on the description of FIGS. 12 to 14, remote control methods for the surface cleaning robot according to the embodiments of the present application will be described in detail below. Exemplarily, reference is made to FIG. 15.

FIG. 15 is a flow chart of a remote control method for a surface cleaning robot provided in an embodiment of the present application. This embodiment is described from the perspective of an electronic device. This embodiment includes:

401. displaying a remote control page on a user interface in response to a remote control page access instruction, wherein the remote control page is provided with an operable remote control widget.

A user may flexibly send a remote control page access instruction to the electronic device. In an implementation, the electronic device has a voice recognition function and can recognize the user's voice instructions. Based on this, the user sends the remote control page access instruction to the electronic device through voice. For example, if the user opens an APP of the surface cleaning robot on the electronic device, access a main interface of the APP, and sends a voice instruction of "Enter Remote Control Mode" to the electronic device, then the electronic device utilizes the voice recognition function to recognize the remote control page access instruction, and displays a remote control page on a user interface in response to the remote control page access instruction.

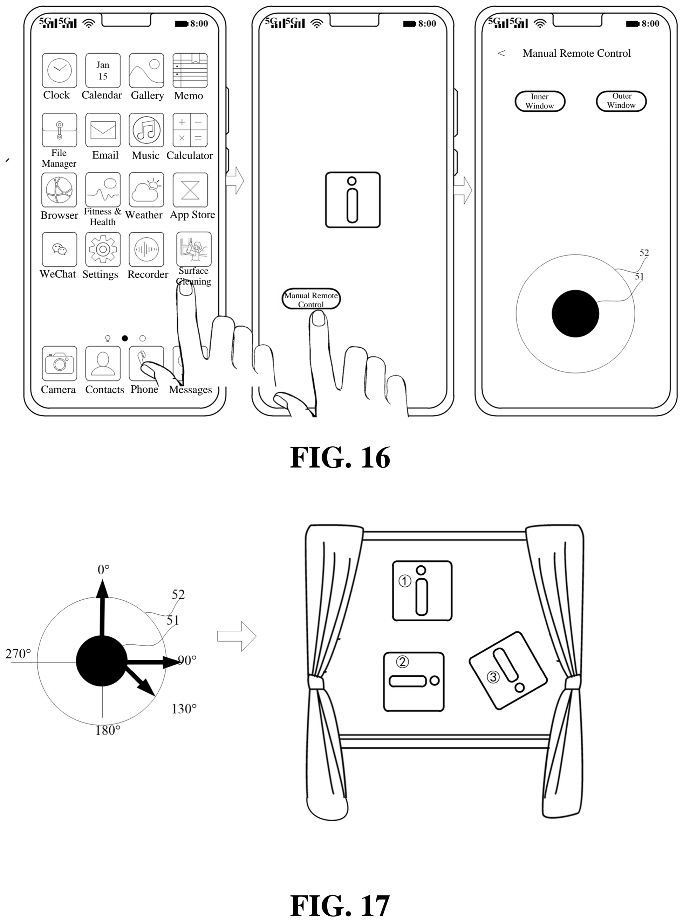

In another implementation, the user opens the APP of the surface cleaning robot on the electronic device and accesses the main interface of the APP, where a "Manual Remote Control" widget is displayed. The user clicks the control to issue the remote control page access instruction, and the electronic device accesses the remote control page. Exemplarily, reference is made to FIG. 16.

FIG. 16 is a schematic diagram of interface variations of the electronic device in the control method for the surface cleaning robot provided in the embodiment of the present application. With reference to FIG. 16, the user interface displays the APP of the surface cleaning robot titled Surface Cleaning. The user clicks on the "Surface Cleaning" APP to access the main interface, where the "Manual Remote Control" widget is displayed. The user clicks on the control to send the remote control page access instruction to the electronic device. The electronic device jumps to the remote control page, on which an operable remote control widget 51 is provided.

With reference to FIG. 16, there is a sliding range 52 at the bottom of the user interface. Initially, the remote control widget 51 is located at the center of the sliding range. The user operates the remote control widget 51 with one hand, so that the remote control widget 51 slides toward any angle. The user may press the remote control widget 51 to slide in a straight line or a curve or the like, thereby remotely controlling the surface cleaning robot to move in a direction desired by the user.

In the embodiment of the present application, after entry to the remote control page, when the user has not touched the remote control widget 51, the user interface may only display the remote control widget 51 without displaying the sliding range 52; alternatively, the two may be displayed at the same time. If only the remote control widget 51 is displayed, when the user touches the remote control widget 51, the sliding range 52 will be displayed on the user interface.

In the embodiment of the present application, the sliding range 52 and the slid remote control widget 51 may be flexibly displayed. In a mnner, when the user slides the remote control widget 51, the position of the sliding range 52 remains unchanged, while the remote control widget 51 can only slide within the sliding range 52, and any part of the remote control widget 51 cannot move out of the sliding range.

In another implementation, when the user slides the remote control widget 51, the position of the sliding range 52 remains unchanged, while the position of the remote control widget 51 relative to the sliding range 52 changes, and the center of the remote control widget 51 moves farthest to a boundary of the sliding range 52. At this time, a part of the remote control widget 51 is outside the sliding range 52.

Compared with the above manner in which only the remote control widget 51 moves while the sliding range 52 does not, still another manner is provided in which when the user slides the remote control widget 51, the sliding range 52 moves within a preset range, while the remote control widget 51 moves within the sliding range, and the remote control widget 51 can only move within the sliding range.

402. remotely controlling a travelling direction of the surface cleaning robot in response to a user's operation on the remote control widget.

The user flexibly slides the remote control widget. For example, the user slides the remote control widget to any angle in 360°; or still for example, the user long presses the remote control widget and slides it in a curve. The electronic device adjusts a travelling direction of the surface cleaning robot according to the user's operation on the remote control widget.

According to the remote control method for the surface cleaning robot provided in the embodiment of the present application, the APP of the surface cleaning robot is installed on the electronic device, and the user calls up the remote control page on the APP and performs the sliding operation on the remote control widget on the remote control page, thereby remotely controlling the travelling direction of the surface cleaning robot. By adopting such a solution, the APP of the surface cleaning robot is installed on the electronic device, and by operating the remote control on the APP interface, the surface cleaning robot is controlled within a 360-degree range to face any direction, so that the surface cleaning robot quickly faces a direction desired by the user, and the operation is simple and efficient.

Typically, the working side has two sides, one of which is an inner window and the other of which is an outer window. When the surface cleaning robot is adhered on the inner window and the user is indoors, a front of the surface cleaning robot faces the user; and when the surface cleaning robot is adhered on the outer window and the user is indoors, a side of the surface cleaning robot provided with the adhesion component faces the user. Unless specially indicated below, the embodiment of the present application will be described in detail by taking as an example a case in which the surface cleaning robot is adhered on the inner window and the user is indoors to clean the inner window.

Optionally, in the above embodiment, in a process of remotely controlling the travelling direction of the surface cleaning robot in response to the user's operation on the remote control widget, the electronic device remotely controls, in response to the user's sliding operation on the remote control widget for facing a desired angle in 360°, the surface cleaning robot to rotate by a target angle, so that the travelling direction of the surface cleaning robot changes from an initial direction to a desired direction, wherein angles in the 360° are in a one-to-one correspondence to directions of 360-degree directions on the working side where the surface cleaning robot is located, the desired angle corresponds to the desired direction, and the target angle is an included angle between the initial direction and the desired direction.

FIG. 17 is a schematic diagram of a relationship between angle and direction in the control method for the surface cleaning robot provided in the embodiment of the present application. With reference to FIG. 17, the remote control widget 51 may slide to any angle in 360°. Any angle in 360-degree directions corresponds to a certain direction of 360-degree directions on the working side where the surface cleaning robot is located. That is to say, the angle and the direction are in a one-to-one correspondence. For example, a travelling direction corresponding to 0° is shown by ① in the figure, a travelling direction corresponding to 90° is shown by ② in the figure, and a travelling direction corresponding to 130° is shown by ③ in the figure. The default initial direction is a direction in which a tail of the surface cleaning robot points to a head thereof before it receives the remote control instruction.

It should be noted that the directions shown by ①, ②, and ③ in the figure are only for schematic default initial directions, and do not represent that there is a plurality of surface cleaning robots on the working side at the same time.

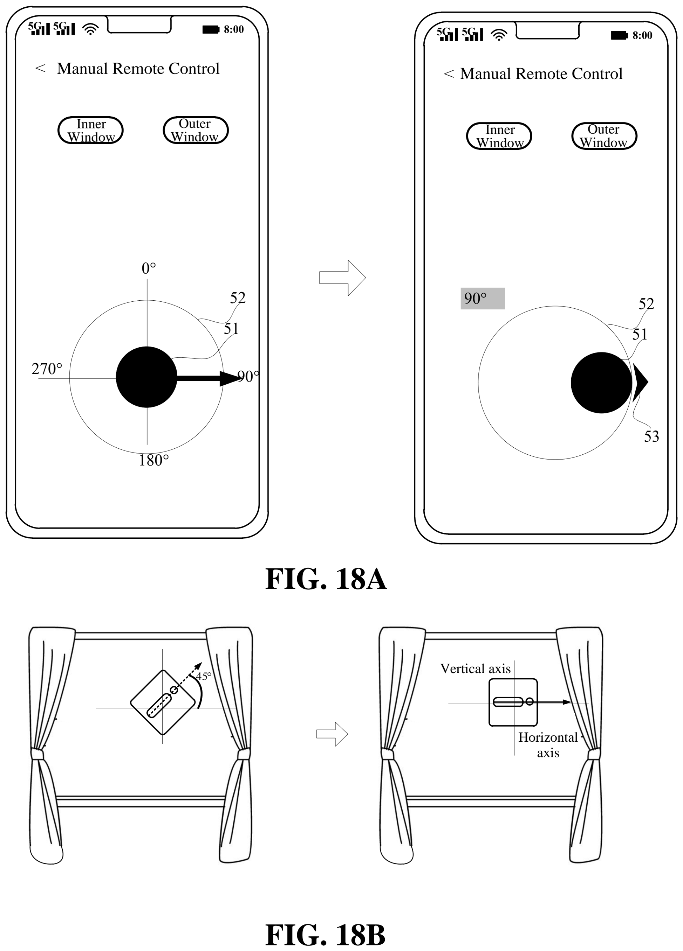

According to the above description of the relationship between direction and angle, the remote control method for the surface cleaning robot described in the embodiment of the present application will be described in detail below. Exemplarily, reference is made to FIGS. 18A and 18B.

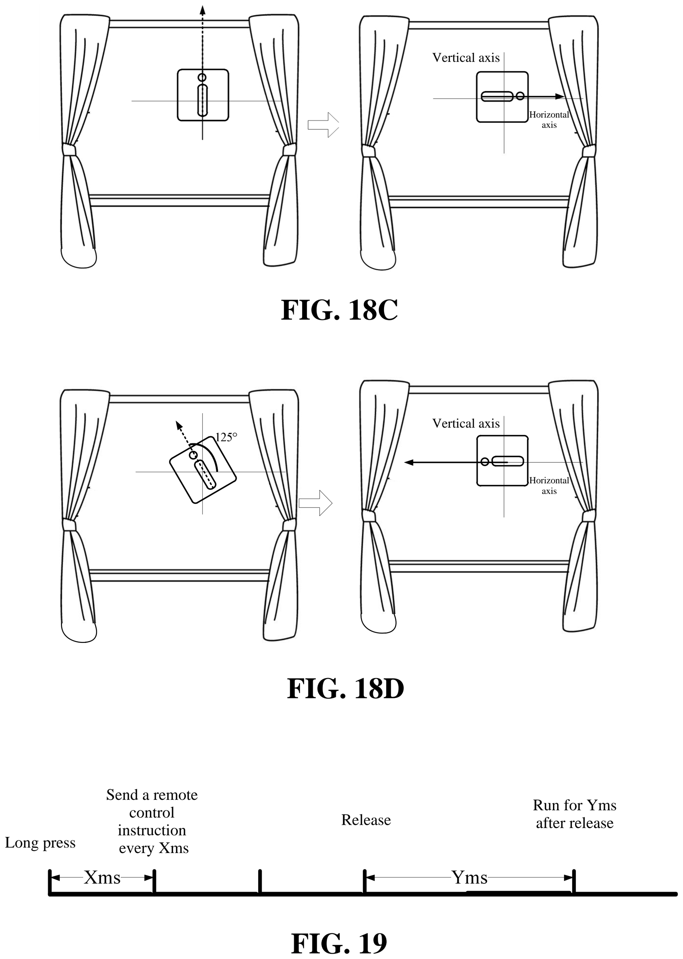

FIG. 18A is a schematic diagram of sliding the remote control widget toward 90° by the user in the control method for the surface cleaning robot provided in the embodiment of the present application. FIG. 18B is a schematic diagram of an action of the surface cleaning robot. FIG. 18C is a schematic diagram of another action of the surface cleaning robot.

With reference to FIG. 18A, the remote control widget 51 may slide to any angle in 360°. Any angle in 360-degree directions corresponds to a certain direction of 360-degree directions on the working side where the surface cleaning robot is located. That is to say, the angle and the direction are in a one-to-one correspondence.

When the desired angle is 90°, namely when the user slides the remote control widget 51 to 90°, the remote control widget 51 moves a distance to the right and then intersects with the boundary of the sliding range, and the 90° is displayed at a preset position on the remote control page, as shown in the gray filled area in the figure. At the same time, a direction cursor 53 is also displayed near the remote control widget. The electronic device determines that the desired angle is 90° and sends to the surface cleaning robot a remote control instruction that carries the desired angle. After receiving the remote control instruction, the surface cleaning robot determines that 90° corresponds to a 90-degree direction, namely a horizontal right direction. Therefore, regardless of the initial direction, it is adjusted to 90°. Alternatively, after determining that the desired angle is 90°, the electronic device determines, according to the desired angle, that the desired direction is the 90-degree direction, and then sends to the surface cleaning robot a remote control instruction that carries the desired direction.

With reference to FIG. 18B, before the surface cleaning robot receives a remote control instruction, the travelling direction is shown by the dotted arrow in the figure, and the included angle between the initial direction and the horizontal axis is 45°. The initial direction can be calculated according to a three-axis acceleration sensor or the like.

After receiving the remote control instruction, the surface cleaning robot determines that a desired direction is a 90-degree direction, then starts from the initial direction and rotates clockwise by a target angle, thereby changing the travelling direction to the desired direction. The desired direction is parallel to the horizontal axis, and the target angle is an included angle between the initial direction and the desired direction. The target angle is 45°.

With reference to FIG. 18C, before the surface cleaning robot receives a remote control instruction, the travelling direction is shown by the dotted arrow in the figure, in which the initial direction is perpendicular to the horizontal axis, and the initial direction is 0-degree direction. The initial direction can be calculated according to a three-axis acceleration sensor or the like.

After receiving the remote control instruction, the surface cleaning robot determines that a desired direction is a 90-degree direction, then starts from the initial direction and rotates clockwise by a target angle, thereby changing the travelling direction to the desired direction. The desired direction is parallel to the horizontal axis, and the target angle is an included angle between the initial direction and the desired direction. The target angle is 90°.

By adopting such a solution, by sliding the remote control widget on the remote control page to a desired angle in 360°, and thereby controlling the surface cleaning robot to rotate from a first direction to a second direction by a target angle, the operation is simple and fast, and the objective of precisely and quickly adjusting the direction of the surface cleaning robot is achieved.

Optionally, in the above embodiment, target angles are 45° and 90° respectively, and a desired angle is 90°. When a target angle is less than or equal to 90°, the electronic device remotely controls the surface cleaning robot to rotate clockwise by the target angle, so that the travelling direction of the surface cleaning robot changes from an initial direction to a desired direction. When a target angle is greater than 90°, the surface cleaning robot is remotely controlled to rotate counterclockwise by a differential angle, so that the travelling direction of the surface cleaning robot changes from the initial direction to an opposite direction of the desired direction, wherein the differential angle is a difference between 180° and the target angle. Exemplarily, reference is made to FIG. 18D.

FIG. 18D is a schematic diagram of yet another action of the surface cleaning robot. With reference to FIG. 18D, before the surface cleaning robot receives a remote control instruction, the travelling direction is shown by the dotted arrow in the figure, and the included angle between the initial direction and the horizontal axis is 125°. The initial direction can be calculated according to a three-axis acceleration sensor or the like.

After receiving the remote control instruction, the surface cleaning robot determines that a desired direction is a 90-degree direction, and the surface cleaning robot determines that a target angle is 125°, and a differential angle is 55°. Therefore, the surface cleaning robot starts from the initial direction and rotates counterclockwise by the differential angle, thereby changing the travelling direction to the desired direction that is parallel to the horizontal axis.

Additionally, when the target angle is 90°, the electronic device remotely controls the surface cleaning robot to rotate clockwise or counterclockwise.

Unlike the above clockwise rotation, if the default initial direction is a direction in which the tail of the surface cleaning robot points to the head, then after the direction in which the tail of the surface cleaning robot points to the head becomes the desired direction by rotating clockwise by the target angle, the surface cleaning robot travels in the desired direction.

After rotating counterclockwise by a differential angle, the direction in which the tail of the surface cleaning robot points to the head becomes an opposite direction to the desired direction. At this time, in order to meet the purpose of the surface cleaning robot travelling in a desired direction, the surface cleaning robot travels in reverse.

By adopting such a solution, when a difference between the target angle and the desired angle is less than 90°, the electronic device remotely controls the surface cleaning robot to rotate clockwise; and when a difference between the target angle and the desired angle is greater than 90°, the electronic device remotely controls the surface cleaning robot to rotate counterclockwise, so that the rotation amount of the surface cleaning robot is as small as possible, which improves the direction adjustment efficiency and thus improves the cleaning efficiency and quality.

Optionally, in the above embodiment, when the target angle is greater than a preset angle, the electronic device remotely controls the surface cleaning robot to self-rotate in situ to a reference direction, and then remotely controls the surface cleaning robot to move forward and turn at the same time until the travelling direction changes from the reference direction to the desired direction, wherein a sum of an included angle between the reference direction and the desired direction and an included angle between the initial direction and the reference direction is equal to the target angle, and the included angle between the reference direction and the desired direction is less than or equal to the preset angle.

Exemplarily, in the embodiment of the present application, the user presses the remote control widget to trigger the surface cleaning robot to run, and if the user stops pressing the remote control widget, then the surface cleaning robot stops running. In a process where the user long presses the remote control widget, it is very likely that the finger will shake or the like, causing the desired angle to change. For example, the desired angle is originally 90°, but due to the user's finger shaking, the desired angle changes to 91°, 89°, or the like. When the target angle is large and the surface cleaning robot is far from rotating to the target angle, regardless of whether the user's finger shakes or not, that is, regardless of whether the target angle changes or not, the surface cleaning robot will spin in situ smoothly and without any lag.

However, if the target angle is large, but the surface cleaning robot has already turned more than halfway, then the user's finger shaking in the process of rotating by the preset angle to reach the desired direction will change the desired angle and thus change the desired direction. The surface cleaning robot periodically updates the desired direction. For example, the desired direction is updated every 50 ms according to a desired angle as most recently received. If the user's finger shakes, then the desired direction will be different after each update, causing the surface cleaning robot to stop and rotate in situ each time the desired direction is updated, thereby leading to a lag in the surface cleaning robot and an unsmooth running process.

To this end, in the embodiment of the present application, when the target angle is greater than the preset angle, the surface cleaning robot first self-rotates in situ until the surface cleaning robot rotates to the reference direction. That is, when a portion of the preset angle remains by which the surface cleaning robot should have rotated, the surface cleaning robot moves forward and turns at the same time until the travelling direction becomes the desired direction. For example, the target angle is 90°. At the beginning, the surface cleaning robot spins in situ by 60°, and then moves forward and turns by the remaining 30° at the same time until the travelling direction changes from the reference direction to the desired direction. An included angle between the initial direction and the reference direction is 90°, an included angle between the reference direction and the desired direction is 30°, and an included angle between the initial direction and the reference direction is 60°.

Additionally, when the target angle is large, the surface cleaning robot first self-rotates in situ and then moves forward and turns at the same time, which can prevent the position of the surface cleaning robot from changing too much.

Similarly, when the surface cleaning robot rotates counterclockwise, if the target angle is greater than the preset angle, then the electronic device remotely controls the surface cleaning robot to self-rotate in situ until the remaining angle is less than or equal to the preset angle. Afterwards, the electronic device remotely controls the surface cleaning robot to move forward and turn at the same time, so that the travelling direction of the surface cleaning robot changes from the initial direction to the desired direction.

By adopting such a solution, when the target angle or the differential angle is large, the electronic device controls the surface cleaning robot to first self-rotate in situ, and then move forward and turn at the same time, which avoids lag in the running operation of the surface cleaning robot, guarantees the smooth running of the surface cleaning robot, and also ensures that the position of the surface cleaning robot may not change too much before and after the direction adjustment.

Optionally, in the above embodiment, when the target angle is less than or equal to a preset angle, the surface cleaning robot is remotely controlled to move forward and turn at the same time, so that the travelling direction of the surface cleaning robot changes from an initial direction to a desired direction.

Exemplarily, when the target angle is a small angle such as 15°, 20°, or 8°, the electronic device controls the surface cleaning robot to move forward and turn at the same time, so that the travelling direction of the surface cleaning robot changes from the initial direction to the desired direction.

Similarly, when the surface cleaning robot rotates counterclockwise, if the differential angle is less than or equal to the preset angle, then the electronic device remotely controls the surface cleaning robot to move forward and turn at the same time, so that the travelling direction of the surface cleaning robot changes from the initial direction to the desired direction.

By adopting such a solution, when the target angle or the differential angle is small, the electronic device controls the surface cleaning robot to move forward and turn at the same time, avoiding lag in the running process of the surface cleaning robot and guaranteeing that the surface cleaning robot runs smoothly.

Optionally, in the above embodiment, the electronic device remotely controls, in response to the user's operations of sliding the remote control widget by a preset distance toward a desired angle in 360° and long pressing the remote control widget, the surface cleaning robot to change the travelling direction from an initial direction to a desired direction, and then travel along the desired direction.

Exemplarily, in the process of remotely controlling the surface cleaning robot, the user slides the remote control widget to a desired angle and then long presses the remote control widget until the travelling direction of the surface cleaning robot becomes a desired direction. After the travelling direction of the surface cleaning robot becomes the desired direction, if the user continues to long press the remote control widget, then the surface cleaning robot moves forward in a straight line along the desired direction. In the straight-line forward movement process, if the user stops long pressing the remote control widget, then the surface cleaning robot stops moving forward.

By adopting such a solution, if the user continuously long presses the remote control widget, then the surface cleaning robot will turn to the desired direction and then move forward in a straight line, achieving the effect of running by a long press and instant stop upon release, and thus meeting the purpose of flexibly controlling the surface cleaning robot.

Optionally, in the above embodiment, after sliding the remote control widget by the preset distance toward the desired angle in 360°, the user stops long pressing the remote control widget in the process of long pressing the remote control widget, and then the electronic device responds to the user's operation of stopping long pressing the remote control widget. If the surface cleaning robot has not yet adjusted the travelling direction to a desired direction, then the surface cleaning robot is remotely controlled to stop direction adjustment; and if the surface cleaning robot is moving forward in a straight line along the desired direction, then the surface cleaning robot is remotely controlled to stop moving forward.

Exemplarily, the user long presses the remote control widget for a period of time and stops pressing, and if the travelling direction of the surface cleaning robot has not yet become the desired direction, then the surface cleaning robot pauses to stop turning; or stops turning but moves forward in a straight line along the current direction, and prompts the user whether to exit remote control, or the like.

The user long presses the remote control widget for a period of time and stops pressing, and if the travelling direction of the surface cleaning robot has become the desired direction and it is moving forward in a straight line along the desired direction, then the surface cleaning robot is remotely controlled to stop moving.

By adopting such a solution, if the user stops long pressing the remote control widget, then the surface cleaning robot stops turning or travelling, achieving the effect of running by a long press and instant stop upon release, and thus meeting the purpose of flexibly controlling the surface cleaning robot.

Optionally, in the above embodiment, in a process of remotely controlling the travelling direction of the surface cleaning robot in response to the user's operation on the remote control widget, the electronic device sends a remote control instruction carrying a desired angle to the surface cleaning robot once every first preset duration since the user long presses the remote control widget, so that the surface cleaning robot executes the remote control instruction within a second preset duration since receiving the remote control instruction, wherein the second preset duration is greater than the first preset duration. If the user continues to press the remote control widget within the second preset duration, then the surface cleaning robot is remotely controlled to execute a new remote control instruction each time it receives the new remote control instruction; and if the user stops pressing the remote control widget after sending the remote control instruction, then the surface cleaning robot is remotely controlled to stop after executing the remote control instruction within the second preset duration starting from receipt of the remote control instruction.

Exemplarily, when the user long presses the remote control widget for the first time, this represents that the electronic device has determined the desired angle. In a subsequent process where the user continues long pressing, the electronic device periodically sends to the surface cleaning robot a remote control instruction that carries a desired angle or desired direction, and the sending period is the first preset duration. Each time the surface cleaning robot receives a new remote control instruction, it executes the remote control instruction for a duration which is the second preset duration. The first preset duration is shorter than the second preset duration. For example, the first preset duration is 10 ms, and the second preset duration is 20 ms.

However, each time the surface cleaning robot receives a new remote control instruction, even if a running duration of the previous remote control instruction (hereinafter referred to as the old remote control instruction) is less than the second preset duration, the surface cleaning robot still executes the new remote control instruction and restarts timing.

After the surface cleaning robot receives a new remote control instruction, if the user lifts his finger and stops pressing the remote control widget, then the surface cleaning robot will no longer receive a new remote control instruction. Therefore, the surface cleaning robot stops moving after executing the last received remote control instruction for the second preset duration.

FIG. 19 is a schematic diagram of a first preset duration and a second preset duration in the control method for the surface cleaning robot provided in the embodiment of the present application. With reference to FIG. 19, when the user long presses the remote control widget, the electronic device will constantly sends a desired angle to the surface cleaning robot. Once release, the surface cleaning robot will not receive the remote control instruction carrying the desired angle and stop running immediately, thereby achieving the effect of running by a long press and instant stop upon release, and enabling the user to accurately adjust the direction of the surface cleaning robot to the desired direction. In order to achieve the instant stop upon release, the surface cleaning robot receives a remote control instruction and runs for a first preset duration, namely Xms. If the user long presses the remote control widget, then the electronic device issues a remote control instruction every Xms. Since X<Y, the surface cleaning robot has received a new remote control instruction before the last remote control instruction has been run for Y milliseconds. Therefore, the surface cleaning robot will be running all the time. When the user releases the control, the surface cleaning robot stops after running for Y milliseconds, which is such a short duration that the user cannot perceive it, thereby achieving the effect of instant stop upon release.

By adopting such a solution, when the user long presses the remote control widget, the electronic device sends each remote control instruction to the surface cleaning robot for a preset duration, whereas the maximum running duration of the surface cleaning robot for each remote control instruction is the second preset duration. Since the first preset duration is less than the second preset duration, the effect of running by a long press and instant stop upon release is achieved through simple duration control, and this manner is simple and thus meets the purpose of flexibly controlling the surface cleaning robot.

Optionally, in the above embodiment, in a process where the electronic device remotely controls the travelling direction of the surface cleaning robot in response to the user's operation on the remote control widget, if after the user slides the remote control widget toward a first angle in 360° and before the direction of the surface cleaning robot becomes a first direction corresponding to the first angle, the user slides the remote control widget toward a second angle in 360°, then the electronic device remotely controls, in response to the user's operation of adjusting the remote control widget toward the second angle in 360°, the surface cleaning robot to rotate so that the travelling direction of the surface cleaning robot is a second direction corresponding to the second angle.

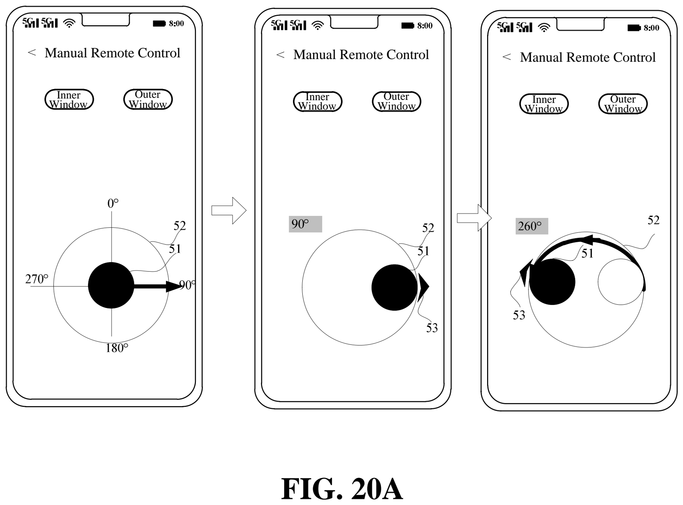

Exemplarily, reference is made to FIG. 20A, which is a schematic diagram of interfaces in the control method for the surface cleaning robot provided in the embodiment of the present application, where the user successively slides the remote control widget to different directions. With reference to FIG. 20A, at the beginning, a desired angle is 90°, that is, the user desires the surface cleaning robot to be parallel to the horizontal axis. After the user presses the remote control widget at a 90-degree position, the angle of the remote control is then adjusted to 260°. That is, the first angle is 90° and the second angle is 260°. The first angle corresponds to a first direction that is a 90-degree direction, whereas the second angle corresponds to a second direction that is a 260-degree direction.

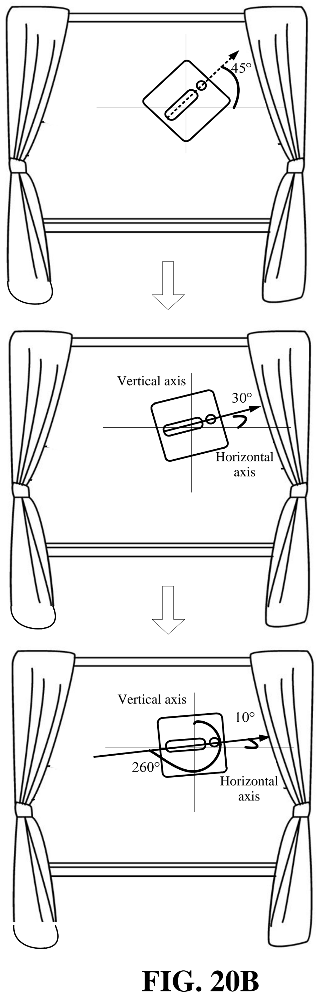

FIG. 20B is a schematic diagram of an action of the surface cleaning robot corresponding to FIG. 20A. With reference to FIG. 20B, before the surface cleaning robot receives a remote control instruction, the travelling direction is shown by the dotted arrow in the figure, and an included angle between an initial direction and the horizontal axis is 45°. The initial direction can be calculated according to a three-axis acceleration sensor or the like.

After receiving the remote control instruction, the surface cleaning robot determines that a desired direction is a 90-degree direction and a target angle is 45°. That is, starting from the initial direction, it rotates clockwise by the target angle, so that the direction of the surface cleaning robot is the second direction.

However, after the electronic device remotely controls the surface cleaning robot to rotate by 15°, it needs to further rotate by 30° to be in the second direction, and then the user adjusts the remote control widget to the second angle. At this time, an included angle between the surface cleaning robot and the positive direction of the horizontal axis is 30°. In order to make the direction of the surface cleaning robot become the second direction, the surface cleaning robot needs to rotate clockwise by 200° or counterclockwise by 160°. That is, the target angle is 200.

Since the target angle is greater than 90°, the electronic device remotely controls the surface cleaning robot to rotate clockwise. A difference between the target angle and 180° is 20°, that is, a surface differential angle is 20°. Therefore, the electronic device remotely controls the surface cleaning robot to rotate clockwise by 20°, so that the direction of the surface cleaning robot is a 80-degree direction. Afterwards, the electronic device remotely controls the surface cleaning robot to travel in reverse, thereby meeting the purpose of the surface cleaning robot travelling along the desired direction.

By adopting such a solution, the electronic device enables the surface cleaning robot to be more flexible by detecting the user's desired angle in real time, and remotely controlling and updating the desired direction of the surface cleaning robot according to the desired angle in real time.

In the above embodiments, the above control method for the surface cleaning robot is described in detail by taking as an example a case in which the surface cleaning robot is adhered on the inner window. How to remotely control the surface cleaning robot when the surface cleaning robot is located on the outer window will be described in detail below.

In an embodiment of the present application, when the surface cleaning robot is located on the outer window, the electronic device remotely controls, in response to the user's sliding operation on the remote control widget toward a desired angle in 360°, the travelling direction of the surface cleaning robot to change from an initial direction to a mirrored direction, wherein an angle corresponding to the mirrored direction and an angle corresponding to the desired direction are explementary angles.

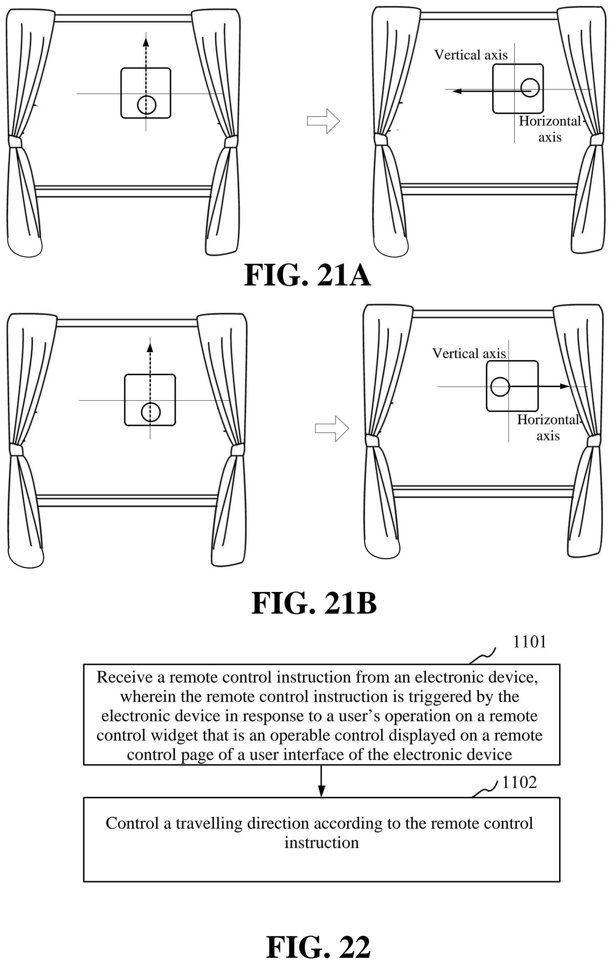

Exemplarily, reference is made to to FIGS. 21A and 21B. FIG. 21A is a schematic diagram of an action of the surface cleaning robot provided in the embodiment of the present application when located on the outer window. FIG. 21B is a schematic diagram of another action of the surface cleaning robot provided in the embodiment of the present application when located on the outer window.

With reference to FIG. 21A, when the surface cleaning robot is located on the outside window, the user is indoors. From the user's perspective, the adhesion component on the surface cleaning robot can be seen. Moreover, the travelling direction is shown by the dotted arrow in the figure, and an included angle between an initial direction and the horizontal axis is 0°. The initial direction can be calculated according to a three-axis acceleration sensor or the like. If the user's desired direction is 90-degree direction, and if the user has not selected an outer window mode, the user slides the remote control widget to 90-degree direction and long presses it, as shown in FIG. 18A. At this time, from the user's perspective, the surface cleaning robot rotates counterclockwise by 90°, and the final direction is not what the user desires.

To this end, in an embodiment of the present application, as shown in FIG. 21B, the electronic device remotely controls the travelling direction of the surface cleaning robot to change from an initial direction to a mirrored direction, and an angle corresponding to the mirrored direction and an angle corresponding to the desired direction are explementary angles, that is, the sum of the angle corresponding to the mirrored direction and the angle corresponding to the desired direction is 360°.

By adopting such a solution, when the surface cleaning robot is located on the outer window, the travelling direction of the surface cleaning robot is remotely controlled according to the user's desired direction, and the travelling direction is changed to a mirrored direction of the desired direction, which is more convenient for user operation.

Optionally, in the above embodiment, the operation on the remote control widget includes: a linear sliding operation on the remote control widget from an initial position toward any angle in 360°, and a curved sliding operation on the remote control widget from a first position to a second position, wherein the initial position is located at a center of a sliding range of the remote control widget, and the first position and the second position are any two positions within the sliding range.

Exemplarily, during a first operation, the remote control widget is located at the central position of the sliding range. At this time, the user may touch the remote control widget from the central position and slide it in a straight line. After the user drags the remote control widget to slide toward a desired angle, if the user changes the desired angle, then the remote control widget can be slid in a curve from the first position, so that the remote control widget reaches the second position. The first position is, for example, the position when the remote control widget is toward 90° in FIG. 20A, whereas the second position is, for example, the position when the remote control widget is toward 260° in FIG. 20A.

By adopting such a solution, the user can slide the remote control widget in a straight line or in a curve, which is simple and flexible to operate, and meets the purpose of flexibly controlling the travelling direction of the surface cleaning robot.

Optionally, in the above embodiment, when the operation on the remote control widget is the curved sliding operation, the trajectory of the remote control widget is an arc or a wavy line.

Exemplarily, referring back to FIG. 20A, the movement trajectory of the remote control widget from the first position to the second position may be an arc, a wavy line, a straight line, a broken line, and the like, which is not limited in the embodiment of the present application.

By adopting such a solution, the sliding trajectory of the remote control widget may be an arc or a wavy line, or the like, which is convenient for the user to operate flexibly.

On the basis of the electronic device controlling the surface cleaning robot, an embodiment of the present application further provides a control method applied to a surface cleaning robot. Exemplarily, reference is made to FIG. 22.

FIG. 22 is a flow chart of a control method for a surface cleaning robot provided in an embodiment of the present application. The method includes:

1101. receiving a remote control instruction from an electronic device, wherein the remote control instruction is triggered by the electronic device in response to a user's operation on a remote control widget that is an operable control displayed on a remote control page of a user interface of the electronic device; and

1102. controlling a travelling direction according to the remote control instruction.

For details, reference may be made to the above description of FIG. 15 and related embodiments, which will not be repeated here.

In the remote control method for the surface cleaning robot provided in the embodiment of the present application, in a process where a user performs a sliding operation on a remote control widget on a remote control page, the electronic device sends a remote control instruction to the surface cleaning robot in response to the user's operation. After receiving the remote control instruction, the surface cleaning robot controls the travelling direction according to the remote control instruction. By adopting such a solution, the user can flexibly control the surface cleaning robot to face any direction of 360-degree directions by operating the remote control widget on the remote control page, and the operation is simple and efficient.

Optionally, in the above embodiment, when the surface cleaning robot controls the travelling direction according to the remote control instruction, in an implementation, if the remote control instruction indicates a target angle, then the surface cleaning robot rotates by the target angle to change the travelling direction from an initial direction to a desired direction, and then moves forward in a straight line along the desired direction, wherein the desired direction is a direction corresponding to a desired angle in 360°, and the desired angle is an angle of direction corresponding to the user's sliding operation on the remote control widget.

In another implementation, the 360-degree directions and the 360-degree angles are in a one-to-one correspondence. After the user slides the remote control widget on the remote control page toward a desired angle, the electronic device obtains a desired direction according to the desired angle, and sends to the surface cleaning robot a remote control instruction that carries the desired direction. After receiving the remote control instruction, the surface cleaning robot determines an initial direction, and then determines a rotation angle according to the initial direction and the desired direction and rotates, thereby adjusting the travelling direction from the initial direction to the desired direction.

The following are apparatus embodiments of the present application, which can be used for executing the method embodiments of the present application. For details not disclosed in the apparatus embodiments of the present application, reference is made to the method embodiments of the present application.

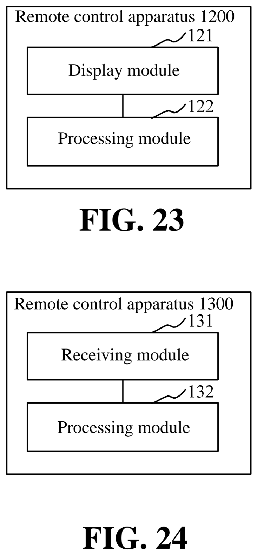

FIG. 23 is a schematic diagram of a remote control apparatus provided in an embodiment of the present application. The remote control apparatus 1200 includes a display module 121 and a processing module 122.

The display module 121 is used for displaying a remote control page on a user interface in response to a remote control page access instruction, wherein the remote control page is provided with an operable remote control; and
The processing module 122 is used for remotely controlling a travelling direction of the surface cleaning robot in response to a user's operation on the remote control widget.

In a feasible implementation, the processing module 122 is used for remotely controlling, in response to the user's sliding operation on the remote control widget for facing a desired angle in 360°, the surface cleaning robot to rotate by a target angle, so that the travelling direction of the surface cleaning robot changes from an initial direction to a desired direction, wherein angles in the 360° are in a one-to-one correspondence to directions of the 360-degree directions on the working side where the surface cleaning robot is located, the desired angle corresponds to the desired direction, and the target angle is an included angle between the initial direction and the desired direction.

In a feasible implementation, the processing module 122 is used for remotely controlling, when the target angle is greater than a preset angle, the surface cleaning robot to self-rotate in situ to a reference direction, and then remotely controlling the surface cleaning robot to move forward and turn at the same time until the travelling direction changes from the reference direction to the desired direction, wherein a sum of an included angle between the reference direction and the desired direction and an included angle between the initial direction and the reference direction is equal to the target angle, and the included angle between the reference direction and the desired direction is less than or equal to the preset angle.

In a feasible implementation, the processing module 122 is used for remotely controlling, when the target angle is less than or equal to a preset angle, the surface cleaning robot to move forward and turn at the same time, so that the travelling direction of the surface cleaning robot changes from an initial direction to a desired direction

In a feasible implementation, the processing module 122 is used for remotely controlling, when a target angle is less than or equal to 90°, the surface cleaning robot to rotate clockwise by the target angle, so that the travelling direction of the surface cleaning robot changes from an initial direction to a desired direction; and for remotely controlling, when a target angle is greater than 90°, the surface cleaning robot to rotate counterclockwise by a differential angle, so that the travelling direction of the surface cleaning robot changes from the initial direction to an opposite direction of the desired direction, wherein the differential angle is a difference between 180° and the target angle.

In a feasible implementation, the processing module 122 is used for remotely controlling, in response to the user's operation of adjusting the remote control widget toward a second angle in 360°, the surface cleaning robot to rotate after the user slides the remote control widget toward a first angle in 360° and before the direction of the surface cleaning robot becomes a first direction corresponding to the first angle, so that the travelling direction of the surface cleaning robot is a second direction corresponding to the second angle.

In a feasible implementation, the processing module 122 is used for remotely controlling, in response to the user's operations of sliding the remote control widget by a preset distance toward a desired angle in 360° and long pressing the remote control widget, the surface cleaning robot to change the travelling direction from an initial direction to a desired direction, and then travel along the desired direction.

In a feasible implementation, the processing module 122 is further used for remotely controlling, in response to the user's operation of stopping long pressing the remote control widget, the surface cleaning robot to stop direction adjustment if the surface cleaning robot has not yet adjusted the travelling direction to a desired direction; and remotely controlling the surface cleaning robot to stop moving forward if the surface cleaning robot is moving forward in a straight line along the desired direction.

In a feasible implementation, the processing module 122 is used for sending a remote control instruction carrying a desired angle to the surface cleaning robot once every first preset duration since the user long presses the remote control widget, so that the surface cleaning robot executes the remote control instruction within a second preset duration since receiving the remote control instruction, wherein the second preset duration is greater than the first preset duration; remotely controlling, if the user continues to press the remote control widget within the second preset duration, the surface cleaning robot to execute a new remote control instruction each time it receives the new remote control instruction; and remotely controlling, if the user stops pressing the remote control widget after sending the remote control instruction, the surface cleaning robot to stop after executing the remote control instruction within the second preset duration starting from receipt of the remote control instruction.

In a feasible implementation, the processing module 122 is used for remotely controlling, in response to the user's sliding operation on the remote control widget toward a desired angle in 360°, the travelling direction of the surface cleaning robot to change from an initial direction to a mirrored direction when the surface cleaning robot is located on the outer window, wherein an angle corresponding to the mirrored direction and an angle corresponding to the desired direction are explementary angles.

In a feasible implementation, the operation on the remote control widget includes: a linear sliding operation on the remote control widget from an initial position toward any angle in 360°, and a curved sliding operation on the remote control widget from a first position to a second position, wherein the initial position is located at a center of a sliding range of the remote control widget, and the first position and the second position are any two positions within the sliding range.

In a feasible implementation, when the operation on the remote control widget is the curved sliding operation, the trajectory of the remote control widget is an arc or a wavy line.

The remote control apparatus provided in the embodiment of the present application can execute the actions of the electronic device in the above embodiment, and it has similar implementation principle and technical effects, which will not be repeated here.

FIG. 24 is a schematic diagram of a remote control apparatus provided in an embodiment of the present application. The remote control apparatus 1300 includes a receiving module 131 and a processing module 132.

The receiving module 131 is used for triggering control operations, wherein the remote control widget is an operable control displayed on a remote control page of a user interface of the electronic device; and
The processing module 132 is used for controlling a travelling direction according to the remote control instruction.

In a feasible implementation, the processing module 132 is used for allowing, when the remote control instruction

**EP 4 711 909 A1**

indicates a target angle, the surface cleaning robot to rotate by the target angle to change the travelling direction from an initial direction to a desired direction, and then move forward in a straight line along the desired direction, wherein the desired direction is a direction corresponding to a desired angle in 360°, and the desired angle is an angle of direction corresponding to the user's sliding operation on the remote control widget.

The remote control apparatus provided in the embodiment of the present application can execute the actions of the surface cleaning robot in the above embodiment and it has similar implementation principle and technical effects, which will not be repeated here.

An embodiment of the present application further provides a computer-readable storage medium, in which computer instructions are stored, wherein the computer instructions, when executed by a processor, are used for implementing the above remote control method for the surface cleaning robot as implemented by the electronic device or the surface cleaning robot.

An embodiment of the present application further provides a computer program product which includes a computer program, wherein the computer program, when executed by a processor, implements the above remote control method for the surface cleaning robot as implemented by the electronic device or the surface cleaning robot.

Other implementations of the present application will readily occur to those skilled in the art from consideration of the specification and practice of the inventions disclosed herein. The present application is intended to cover any modifications, uses or adaptations of the present application which follow the general principles of the present application and include common knowledge or customary technical means in the technical field that are not disclosed in the present application. The specification and the embodiments are considered as exemplary only, and the true scope and spirit of the present application should be indicated by the following claims.

It should be understood that the present application is not limited to the exact structures that have been described above and shown in the drawings, and that various modifications and changes may be made without departing from the scope thereof. The scope of the present application is limited only by the appended claims.

It should be noted for the entirety that some of the terms that appear in the present application may be understood to have equivalent meanings, but are expressed differently in different description scenarios and embodiments. For example, the "manual remote control interaction interface" is equivalent to the "remote control page", the "manual shaking" control 31 is equivalent to the "operable remote control widget 51", the limit zone 51 is equivalent to the "sliding range 52", and so on. Also, the client device described in the present application is an electronic device.

The apparatus embodiments described above are merely illustrative, in which the units described as split components may or may not be physically separate, and the components displayed as units may or may not be physical units, that is, they may be located in one place or distributed across a plurality of network units. Some or all of the modules therein may be selected according to actual needs to achieve the purpose of the embodiment solutions. Those skilled in the art can understand and implement them without any creative labor.

Through the above description of the implementations, those skilled in the art can clearly understand that the implementations can be implemented by means of software plus a necessary general-purpose hardware platform, or by hardware, of course. Based on such understanding, the above technical solutions can essentially, or the parts that contribute to the existing technology, can be embodied in the form of a software product. The computer software product can be stored in a computer-readable storage medium, such as ROM/RAM, a disk, an optical disk, or the like, and includes several instructions for enabling a computer device (which may be a personal computer, a server, or a network device, or the like) to execute the methods described in the embodiments or in certain parts of the embodiments.

Finally, it should be noted that the above embodiments are only intended to illustrate the technical solutions of the present application, rather than to limit them. Although the present application has been described in detail with reference to the foregoing embodiments, those skilled in the art should understand that they can still modify the technical solutions recited in the foregoing embodiments, or make equivalent replacements for some of the technical features therein. Furthermore, these modifications or replacements do not deviate the essence of the corresponding technical solutions from the spirit and scope of the technical solutions of the embodiments of the present application.

**Claims**

1. A robot control method, applicable to a client, comprising:

    determining a target direction in response to a sliding operation in any direction in 360 degrees on an interface;
    determining a moving speed according to an area to which an operation termination position of the sliding operation belongs in the interface; and
    controlling, according to the target direction, a robot to adjust a posture and to move at the moving speed according to an adjusted posture.

2. The method according to claim 1, wherein determining the target direction in response to the sliding operation comprises:

   determining an operation termination position of the sliding operation; and
   determining the target direction based on the operation termination position.

3. The method according to claim 2, wherein determining the moving speed according to the area to which the operation termination position belongs in the interface comprises:

   determining a sliding distance based on the operation termination position;
   determining, according to the sliding distance, an area to which the operation termination position belongs in the interface; and
   determining the moving speed based on the area to which the operation termination position belongs in the interface.

4. The method according to claim 3, further comprising:
   controlling, in response to a release operation for the sliding operation at the operation termination position and according to the sliding distance, the robot to stop moving or to keep moving at the moving speed in the target direction.

5. The method according to any one of claims 2-4, further comprising:

   displaying, on the interface, a manipulation control comprising a limit zone and a draggable widget on the limit zone that can be dragged in any direction; and
   moving, in response to the sliding operation, the draggable widget within the limit zone according to the sliding operation;
   wherein the operation termination position is a position on the limit zone where the draggable widget stops moving.

6. The method according to claim 5, wherein determining the target direction based on the operation termination position comprises:

   determining, based on the operation termination position, a deflection angle of the draggable widget relative to a reference direction; and
   determining the target direction according to the deflection angle.

7. The method according to claim 5, wherein determining the sliding distance based on the operation termination position comprises:

   calculating a distance between the operation termination position and a central position of the limit zone to determine the distance as the sliding distance; and determining, according to the sliding distance, the area to which the operation termination position belongs in the interface, comprises:

   determining, according to the sliding distance, an area where the draggable widget is located in the limit zone;
   determining the area where the draggable widget is located in the limit zone as an area to which the operation termination position belongs in the interface; and

   determining the moving speed based on the area to which the operation termination position belongs in the interface, comprises:
   determining the moving speed based on the area where the draggable widget is located in the limit zone.

8. The method according to claim 7, wherein determining the moving speed based on the area where the draggable widget is located in the limit zone comprises:

   determining the moving speed according to the sliding distance if the draggable widget is in a first area of the limit zone; or determining a first preset speed as the moving speed; and
   determining the moving speed according to a deflection angle of the draggable widget relative to a reference direction if the draggable widget is in a second area of the limit zone; or determining the moving speed in response to a rotation operation on the second area and according to a rotation angle and a rotation direction corresponding to the rotation operation; or determining a second preset speed as the moving speed;
wherein the second area is outside the first area.

9. The method according to claim 8, wherein when the draggable widget is in the second area of the limit zone, the method further comprises:

updating a display state of the second area to reflect that a lock control function corresponding to the second area is activated; wherein the lock control function is used for locking the draggable widget to control the robot to perform autonomous directional constant-speed movement; and
allowing a graphic element on the draggable widget that reflects a surface of a job object where the robot is located to disappear or remain displayed.

10. The method according to claim 9, further comprising:
locking the draggable widget in a case where a release operation for the sliding operation is detected at the operation termination position, and updating a display state of the draggable widget to reflect that the draggable widget is in a locked state.

11. The method according to claim 10, wherein locking the draggable widget comprises:

fixing, according to the operation termination position, the draggable widget at a target position on a boundary of the first area, wherein the target position is closest to and in a straight line with the operation termination position; and allowing the second area to disappear; or
fixing the draggable widget at the operation termination position.

12. The method according to claim 11, further comprising:

unlocking the draggable widget in a case where it is detected that an unlocking condition is met, and returning the draggable widget to the central position of the limit zone; and
allowing the second area to appear if the second area is in a disappearing state;
wherein the unlocking condition comprises at least one of: receiving movement stop information sent by the robot, and monitoring an operation triggered on the limit zone.

13. The method according to any one of claims 6-12, further comprising:

determining a surface of a job object where the robot is located; and
displaying, on the draggable widget, a graphic element reflecting the surface of the job object where the robot is located,
wherein the surface of the job object comprises at least one of an inner surface facing a user and an outer surface corresponding to the inner surface.

14. The method according to claim 13, wherein determining the surface of the job object where the robot is located comprises:

displaying at least one graphic element; wherein one graphic element reflects that the robot is on one surface of a job object;
determining a selected graphic element in response to a selection operation on the at least one graphic element; and
determining, according to the selected graphic element, a surface of the job object where the robot is located, wherein a graphic element displayed on the draggable widget is the selected graphic element.

15. The method according to claim 14, further comprising:

acquiring posture information of the robot; and
updating a posture of a graphic element on the draggable widget according to the posture information, to enable the graphic element on the draggable widget to reflect a posture of the robot.

16. A robot control method, applicable to a client, comprising:

determining a sliding distance in response to a sliding operation on an interface;

determining, according to the moving distance, an area to which an operation termination position of the sliding operation belongs in the interface;

determining a moving speed according to the area to which the operation termination position belongs in the interface; and

controlling the robot to move at the moving speed.

17. A robot control method, applicable to a client, comprising:

determining a target direction in response to a sliding operation in any direction in 360 degrees on an interface;

determining a moving speed in response to a release operation after the sliding operation reaches a target area; and

controlling, according to the target direction, the robot to adjust a posture and to continuously move at the moving speed according to the adjusted posture.

18. The method according to claim 17, wherein the target area is an area associated with a lock control function; and the lock control function is used for locking an operation termination position of the sliding operation in a case where the release operation is detected.

19. A robot control method, applicable to a client, comprising:

displaying, on an interface, a manipulation control comprising a limit zone and a draggable widget on the limit zone that can be dragged in any direction;

controlling, in a case where it is detected that the draggable widget is triggered to move in any direction in 360 degrees on the limit zone, a robot to follow a corresponding target direction upon the draggable widget stops moving, to adjust a moving direction and to move in the adjusted moving direction;

releasing the draggable widget in a case where it is detected that a movement of the draggable widget is stopped within a first area of the limit zone, and returning the draggable widget to a set position to control the robot to stop moving; and

releasing the draggable widget in a case where it is detected that the movement of the draggable widget is stopped within a second area of the limit zone, and locking the draggable widget to control the robot to maintain moving in the adjusted moving direction; wherein the second area is outside the first area.

20. A robot control system, comprising:

a robot for performing a job task on a surface of a job object; and

a client in communication connection with the robot for implementing the steps of the robot control method according to any one of claims 1-15, or implementing the steps of the robot control method according to claim 16, or implementing the steps of the robot control method according to claim 17 or 18, or implementing the steps of the robot control method according to claim 19.

21. The system according to claim 20, wherein the robot is an adhesion-type surface cleaning robot.

22. A client device, comprising:

a memory storing one or more computer instructions; and

a processor coupled with the memory for executing the one or more computer instructions to implement the steps of the robot control method according to any one of claims 1-15, or implement the steps of the robot control method according to claim 16, or implement the steps of the robot control method according to claim 17 or 18, or implement the steps of the robot control method according to claim 19.

**FIG. 1a**

**FIG. 1b**

| | |
|---|---|
| Determine a target direction in response to a sliding operation in any direction in 360 degrees on an interface | 101 |
| ↓ | |
| Determine a moving speed according to an area to which an operation termination position of the sliding operation belongs in the interface | 102 |
| ↓ | |
| Control, according to the target direction, a robot to adjust a posture and to move according to the adjusted posture | 103 |

**FIG. 2**

**Cleaning in progress**

Auto spray is ON

3

Edge mode is recommended for glass larger than 45 cm × 45 cm

For heavily soiled glass, multiple wipes achieve better effect! X

Quick **Deep** Edge Spot

31

Manual Remote Control

One Key Return

**Manual Remote Control**

4

Please select the robot perspective you are currently seeing

421 422

42

5

**Manual Remote Control**

42

421 422

Cleaning while under remote control

511 51

421

Manual Spray

Spot Cleaning

Or

5'

**Manual Remote Control**

Cleaning while under remote control

51

Manual Spray

Spot Cleaning

**FIG. 3**

**FIG. 4a**

**FIG. 4b**

**FIG. 5a**

**FIG. 5b**

Manual Remote Control

511

6

Manual Spray

Spot Cleaning

**FIG. 6a**

Manual Remote Control

511

Manual Spray

Spot Cleaning

**FIG. 6b**

Inner surface of job object

200

< Manual Remote Control

Cleaning while under remote control

421

511

Manual Spray

Spot Cleaning

100

**FIG. 7**

Determine a sliding distance in response to a sliding operation on an interface ⌐201

↓

Determine, according to the sliding distance, an area to which an operation termination position of the sliding operation belongs in the interface ⌐202

↓

Determine a moving speed according to the area to which the operation termination position belongs in the interface ⌐203

↓

Control the robot to move at the moving speed ⌐204

# FIG. 8

Determine a target direction in response to a sliding operation in any direction in 360 degrees on an interface ⌐301

↓

Determine a moving speed in response to a release operation after the sliding operation reaches a target area ⌐302

↓

Control, according to the target direction, the robot to adjust a posture and to continuously move at the moving speed according to the adjusted posture ⌐303

# FIG. 9

**FIG. 10**

**FIG. 11**

**FIG. 12**

200    230    210

220

240

241

250

**FIG. 13**

Rotate counterclockwise by 90°

Rotate counterclockwise by 90°

Rotate counterclockwise by 90°

**FIG. 14**

401

Display a remote control page on a user interface in response to a remote control page access instruction, wherein the remote control page is provided with an operable remote control control

402

Remotely control a travelling direction of the surface cleaning robot in response to a user's operation on the remote control control

**FIG. 15**

**FIG. 16**

**FIG. 17**

**FIG. 18A**

**FIG. 18B**

**FIG. 18C**

**FIG. 18D**

**FIG. 19**

# FIG. 20A

45°

Vertical axis

30°

Horizontal
axis

Vertical axis

10°

260°

Horizontal
axis

**FIG. 20B**

**FIG. 21A**

**FIG. 21B**

1101

Receive a remote control instruction from an electronic device, wherein the remote control instruction is triggered by the electronic device in response to a user's operation on a remote control widget that is an operable control displayed on a remote control page of a user interface of the electronic device

1102

Control a travelling direction according to the remote control instruction

**FIG. 22**

Remote control apparatus 1200

Display module /121

Processing module /122

# FIG. 23

Remote control apparatus 1300

Receiving module /131

Processing module /132

# FIG. 24

## INTERNATIONAL SEARCH REPORT

| | International application No. |
|---|---|
| | **PCT/CN2024/087347** |

**A. CLASSIFICATION OF SUBJECT MATTER**

G06F3/0485(2022.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; 百度, BAIDU; IEEE: 机器人, 方向, 速度, 速率, 滑动, 滑移, 移动, 释放, 锁定, robot, direction, speed, velocity, slide, move, release, lock

**C. DOCUMENTS CONSIDERED TO BE RELEVANT**

| Category* | Citation of document, with indication, where appropriate, of the relevant passages | Relevant to claim No. |
|---|---|---|
| PX | CN 116350113 A (ECOVACS HOUSEHOLD ROBOTICS CO., LTD.) 30 June 2023 (2023-06-30) <br> description, paragraphs 2-150 | 1-22 |
| X | CN 114869171 A (MEIZHI ZONGHENG TECHNOLOGY CO., LTD.) 09 August 2022 (2022-08-09) <br> description, paragraphs 92-178 | 1-3, 5-8, 13-16, 20-22 |
| Y | CN 114869171 A (MEIZHI ZONGHENG TECHNOLOGY CO., LTD.) 09 August 2022 (2022-08-09) <br> description, paragraphs 92-178 | 4-15, 17-22 |
| Y | CN 115957503 A (NETEASE (HANGZHOU) NETWORK CO., LTD.) 14 April 2023 (2023-04-14) <br> description, paragraphs 25-134 | 4-15, 17-22 |
| X | CN 103309353 A (LENOVO (BEIJING) CO., LTD.) 18 September 2013 (2013-09-18) <br> description, paragraphs 65-149 | 1-3, 5-8, 13-16, 20-22 |
| Y | CN 103309353 A (LENOVO (BEIJING) CO., LTD.) 18 September 2013 (2013-09-18) <br> description, paragraphs 65-149 | 4-15, 17-22 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 July 2024** | **23 July 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/087347** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2008070236 A (SANYO ELECTRIC CO., LTD.) 27 March 2008 (2008-03-27)<br>entire document | 1-22 |

Form PCT/ISA/210 (second sheet) (July 2022)

**INTERNATIONAL SEARCH REPORT**
Information on patent family members

International application No.

**PCT/CN2024/087347**

| Patent document cited in search report | | | Publication date (day/month/year) | Patent family member(s) | | | Publication date (day/month/year) |
|---|---|---|---|---|---|---|---|
| CN | 116350113 | A | 30 June 2023 | CN | 116350113 | B | 08 August 2023 |
| CN | 114869171 | A | 09 August 2022 | None | | | |
| CN | 115957503 | A | 14 April 2023 | None | | | |
| CN | 103309353 | A | 18 September 2013 | CN | 103309353 | B | 30 March 2016 |
| JP | 2008070236 | A | 27 March 2008 | None | | | |

Form PCT/ISA/210 (patent family annex) (July 2022)

**REFERENCES CITED IN THE DESCRIPTION**

**Patent documents cited in the description**

- CN 202310500047
- CN 202310636948